(19)

Europäisches Patentamt

European Patent Office

Office européen des brevets

(11) **EP 4 756 491 A1**

(12) **EUROPEAN PATENT APPLICATION**

(43) Date of publication:
10.06.2026 Bulletin 2026/24

(21) Application number: 25221764.1

(22) Date of filing: 09.12.2025

(51) International Patent Classification (IPC):
*G01S 15/89* (2006.01)     *G06T 19/00* (2011.01)
*G06T 19/20* (2011.01)

(52) Cooperative Patent Classification (CPC):
**G06T 19/00; G06T 19/20;** G01S 15/8993;
G06T 2207/10132; G06T 2207/10136;
G06T 2210/41

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 09.12.2024  CN 202411804470
26.12.2024  CN 202411946582
26.12.2024  CN 202411942357
26.12.2024  CN 202411942352

(71) Applicant: Wuhan United Imaging Healthcare Co.,
Ltd.
WuHan, Hubei 430206 (CN)

(72) Inventors:
• WANG, Di
Wuhan, 430206 (CN)
• XIA, Qi
Wuhan, 430206 (CN)
• CAI, Lu
Wuhan, 430206 (CN)
• LIN, Fanglue
Wuhan, 430206 (CN)
• SONG, Jingwei
Wuhan, 430206 (CN)

(74) Representative: Wang, Bo
Panovision IP
Ebersberger Straße 3
85570 Markt Schwaben (DE)

(54) **SYSTEMS AND METHODS FOR GENERATING THREE-DIMENSIONAL ULTRASOUND IMAGES BASED ON TWO-DIMENSIONAL ULTRASOUND IMAGES**

(57)     A system for generating a 3D heart model based on 2D ultrasound image is provided. The system includes at least one storage device and at least one processor configured to communicate with the at least one storage device. The at least one storage device includes a set of instructions. The at least one processor is configured to communicate with the at least one storage device. When executing the set of instructions, the at least one processor is configured to direct the system to perform operations. The operations includes: obtaining a 2D ultrasound image of a subject; obtaining a target 3D model of an anatomical structure of the subject; obtaining a transformed target 3D model by transforming the target 3D model to align the target 3D model with the 2D ultrasound image; and generating a target 3D image of the subject based on the transformed target 3D model and the 2D ultrasound image.

200

**FIG. 2**

## Description

### CROSS-REFERENCE TO RELATED APPLICATIONS

This application claims priority to the following Chinese patent applications, the entire contents of each of which are hereby incorporated by reference:

Chinese Patent Application No. 202411804470.3, filed on December 9, 2024;
Chinese Patent Application No. 202411946582.2, filed on December 26, 2024;
Chinese Patent Application No. 202411942357.1, filed on December 26, 2024; and
Chinese Patent Application No. 202411942352.9, filed on December 26, 2024.

### TECHNICAL FIELD

The present disclosure generally relates to a field of imaging technology, and in particular to a system and a method for generating a three-dimensional (3D) ultrasound image based on a two-dimensional (2D) ultrasound image.

### BACKGROUND

Ultrasound (US) imaging technology is widely used in clinical diagnosis, interventional therapy, and surgical navigation due to its advantages of real-time imaging, non-radiation, portability, and low cost. However, traditional 2D ultrasound images only provide information from a single slice. Image quality and diagnostic results are easily affected by the operator's skill and experience. This places high demands on the operator's spatial imagination ability.
To overcome these limitations, real-time 2D ultrasound images may be registered and fused with 3D data, providing 3D visualization for the 2D ultrasound images, helping surgeons more accurately grasp the patient's anatomical structure, thereby improving surgical precision and safety.
Therefore, there is an urgent need for providing a system and a method for 3D ultrasound image generation to achieve accurate transformation of 3D data into 2D ultrasound images.

### SUMMARY

An aspect of the present disclosure provides a system for generating a 3D ultrasound image based on a 2D ultrasound image. The system includes at least one storage device and at least one processor configured to communicate with the at least one storage device. The at least one storage device includes a set of instructions. The at least one processor is configured to communicate with the at least one storage device. When executing the set of instructions, the at least one processor is configured to direct the system to perform operations. The operations includes: obtaining a 2D ultrasound image of a subject; obtaining a target 3D model of an anatomical structure of the subject; obtaining a transformed target 3D model by transforming the target 3D model to align the target 3D model with the 2D ultrasound image; and generating a target 3D image of the subject based on the transformed target 3D model and the 2D ultrasound image.

### BRIEF DESCRIPTION OF THE DRAWINGS

The present disclosure is further illustrated by way of exemplary embodiments. These exemplary embodiments are described in detail with reference to the accompanying drawings. These embodiments are non-limiting. In these embodiments, the same reference numerals denote the same structures.

FIG. 1 is a schematic diagram illustrating a system architecture of a system for generating a 3D ultrasound image based on a 2D ultrasound image according to some embodiments of the present disclosure;
FIG. 2 is a flowchart of an exemplary process for generating a 3D ultrasound image based on a 2D ultrasound image according to some embodiments of the present disclosure;
FIG. 3 is a flowchart of an exemplary process for determining a first transformation model according to some embodiments of the present disclosure;
FIG. 4 is a flowchart of an exemplary process for determining second pose information according to some embodiments of the present disclosure;
FIG. 5 is a flowchart of an exemplary process for updating a target 3D image according to some embodiments of the present disclosure;
FIG. 6 is a flowchart of an exemplary process for obtaining a transformed target 3D model according to some embodiments of the present disclosure;

FIG. 7 is a schematic diagram of a comparison image according to some embodiments of the present disclosure;

FIG. 8 is a flowchart of an exemplary process for determining a third transformation model according to some embodiments of the present disclosure;

FIG. 9 is a schematic diagram of a comparison image according to some other embodiments of the present disclosure;

FIG. 10 is a flowchart of an exemplary process for obtaining a transformed target 3D model according to some other embodiments of the present disclosure;

FIG. 11 is a flowchart of an exemplary process for performing a first transformation operation according to some other embodiments of the present disclosure;

FIG. 12 is a schematic diagram illustrating an architecture of a system for generating a 3D ultrasound image based on a 2D ultrasound image according to some other embodiments of the present disclosure;

FIG. 13 is a flowchart of an exemplary process for determining a motion phase of a 2D ultrasound image according to some embodiments of the present disclosure;

FIG. 14 is a flowchart of an exemplary process for determining a target transformation model according to some embodiments of the present disclosure;

FIG. 15 is a schematic diagram of an exemplary process for determining a target transformation model according to some embodiments of the present disclosure;

FIG. 16 is a schematic diagram of a target 3D image according to some embodiments of the present disclosure;

FIG. 17 is a schematic diagram of a target 3D model according to some embodiments of the present disclosure; and

FIG. 18 is a schematic diagram of an device for generating a 3D ultrasound image based on a 2D ultrasound image according to some embodiments of the present disclosure.

## DETAILED DESCRIPTION

To make the objectives, technical solutions, and advantages of the present disclosure clearer and more explicit, the present disclosure is further described in detail below with reference to the accompanying drawings and embodiments. It should be understood that the specific embodiments described herein are merely illustrative of the present disclosure and are not intended to limit the present disclosure.

As a non-invasive examination manner, ultrasound scanning is widely used in clinical scenarios due to its advantages of being non-invasive, having a wide range of applications, being safe, etc. For example, an operator (e.g., a doctor) performs an ultrasound scan on the heart of a patient. Based on the ultrasound images obtained from the ultrasound scan, the doctor may assess the structure and function of the heart, such as the size of the heart, wall thickness, interventricular septal motion, motion and function of the heart valves, etc., assisting the doctor in diagnosing various heart diseases, such as cardiac hypertrophy, heart valve substrate, heart valve prolapse, heart valve regurgitation, pericardial effusion, myocarditis, etc. Ultrasound scanning may also dynamically detect changes in the heart during exercise, which is very helpful for assessing cardiac function under stress conditions. For example, exercise tolerance tests or stress tests can be performed based on the ultrasound scan.

However, traditional manners rely on the clinical experience of doctors, making diagnosis difficult. Furthermore, the structure of the scanned area is complex, and it is difficult for doctors to correlate 2D images with actual anatomical relationships during clinical scanning, especially for primary care doctors, young doctors, or doctors in certain clinical departments. Correlating 2D cardiac ultrasound images with a more realistic 3D anatomical structure (e.g., the heart) presents certain challenges. Relying solely on 2D sections for identification and measurement leads to problems of inaccurate identification and measurement.

In some embodiments, a 2D ultrasound image may be transformed into a coordinate system or space of a 3D model to determine a corresponding cross-section of the 2D ultrasound image in a 3D anatomical model. Existing 2D-3D transformation techniques still face several challenges. First, existing transformation methods typically use static 3D models, which may not match the specific motion phase in which the real-time 2D ultrasound image is located, leading to reduced transformation accuracy. Second, when there is a difference between the 3D model used (e.g., a general anatomical model) and the actual anatomical dimensions of the patient, traditional rigid transformations may not correct the size mismatch problem. In this regard, the present disclosure provides a system for generating a 3D ultrasound image based on a 2D ultrasound image, which can achieve precise registration and transformation between a 2D ultrasound image and a 3D model.

As used in the present disclosure, performing a transformation on a first image based on a second image to obtain a transformed first image refers to mapping coordinates of pixel points in the first image in a first coordinate system of the 3D model to coordinates in a second coordinate system of the second image, such that the transformed first image aligns with the second image. The transformation on the first image based on the second image may be performed based on one or more transformation models (or relationships) between the first coordinate system and the second coordinate system (also referred to as space transformation models or relationships between the first image and the second image). In some embodiments, a transformation model or relationship between the first coordinate system and the second coordinate system may be obtained by performing a registration between the first image and the second image. The registration between the first image and the second image refers to a process for determining the space transformation model or relationship between the first image and the second image. The first image may include a 3D model (e.g., the target 3D model) as described elsewhere in the present disclosure. The second image may include a 2D ultrasound image as described elsewhere in the present disclosure.

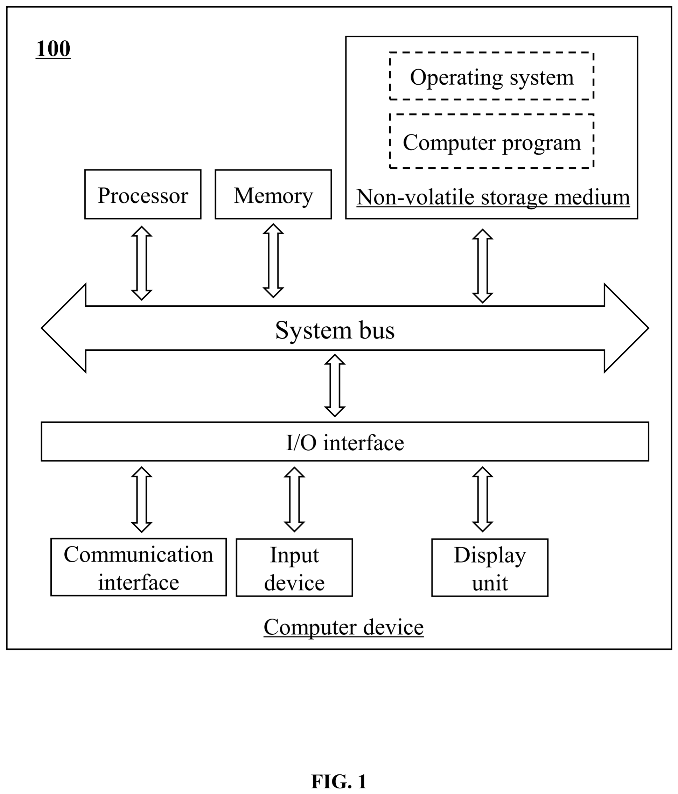

FIG. 1 is a schematic diagram illustrating a system architecture of a system for generating a 3D ultrasound image based on a 2D ultrasound image according to some embodiments of the present disclosure.

The method described in the present disclosure may be implemented on a system for 3D ultrasound image generation based on a 2D ultrasound image (hereinafter referred to as the system). The system may include a computer device 100.

In some embodiments, the system may further include an ultrasound probe of an ultrasound device. The ultrasound probe may emit ultrasound waves towards a subject (e.g., body tissue or an organ of a patient) and receive echo signals reflected from different slices of tissues. These echo signals are converted into electrical signals and processed by the computer device 100 to generate and display a 2D ultrasound image (also referred to as a 2D ultrasound section) in real time.

The computer device 100 may be a dedicated medical equipment terminal integrally designed with the ultrasound probe, or a computing device connected to the ultrasound probe via a wired or wireless connection, such as an industrial computer, a laptop, a tablet, a workstation, etc. The computer device 100 may include, but is not limited to, at least one processor, at least one storage device (e.g., including a memory and a non-volatile storage medium). In some embodiments, the computer device 100 may further include a system bus, an I/O interface, a communication interface, an input device, a display unit, or the like, or a combination thereof.

The at least one processor may be a Central Processing Unit (CPU), or another general-purpose processor, a Digital Signal Processor (DSP), an Application Specific Integrated Circuit (ASIC), a Programmable Logic Device (PLD), etc. The processor is configured to provide computing and control capabilities to implement the various methods and functions described in the embodiments of the present disclosure.

In some embodiments, the processor is configured to direct the system to perform operations including: obtaining one or more 2D ultrasound images of a subject; obtaining a target 3D model of an anatomical structure of the subject; obtaining a transformed target 3D model by transforming the target 3D model based on the one or more 2D ultrasound images to align the target 3D model with the 2D ultrasound images; and generating a target 3D image of the subject based on the transformed target 3D model and/or the 2D ultrasound image

The non-volatile storage medium (e.g., Read-Only Memory (ROM), a hard disk, a Solid State Drive (SSD), or flash memory, etc.) stores an operating system and a computer program. The computer program, when executed by the processor, implements the method for generating a 3D ultrasound image based on a 2D ultrasound image. The memory (e.g., Random Access Memory (RAM), etc.) provides an environment for the operation of the operating system and the computer program in the non-volatile storage medium.

The system bus is configured to establish communication connections and data transmission channels between core components such as the processor, the memory, and the non-volatile storage medium.

The I/O interface is configured to connect the system bus to external devices (such as the communication interface, the input device, and the display unit) and manage data input and output.

The communication interface is used for wired or wireless communication with external terminals. Wireless communication may be implemented via Wi-Fi, a mobile cellular network, NFC (Near Field Communication), or other technologies. The communication interface may include an Ethernet adapter, a Wi-Fi module, a Bluetooth module, etc.

The input device is configured to receive instructions and data input from an operator. The input device may include a touch layer covering the display screen, buttons, a trackball, or a touchpad provided on the housing of the computer device, or an external keyboard, touchpad, or mouse.

The display unit is configured to present information to the operator, such as displaying at least one of the 2D ultrasound image, the transformed target 3D model, or the target 3D image. The display unit may include a liquid crystal display or an electronic ink display, etc.

Those skilled in the art may understand that the structure shown in FIG. 1 is only a block diagram of part of the structure related to the solution of the present disclosure, and does not constitute a limitation on the computer device 100 to which the solution of the present disclosure is applied. A specific computer device 100 may include more or fewer components than those shown in the figure, or combine some components, or have a different arrangement of components.

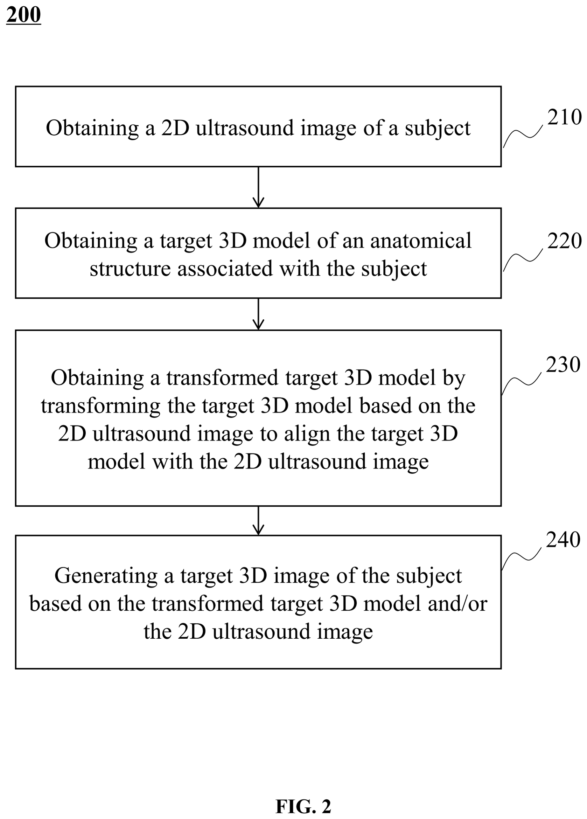

FIG. 2 is a flowchart of an exemplary process for generating a 3D ultrasound image based on a 2D ultrasound image according to some embodiments of the present disclosure. In some embodiments, as shown in FIG. 2, a method for generating a 3D ultrasound image based on a 2D ultrasound image is provided. Process 200 is executed by the at least one processor of the computer device 100. The process 200 includes the following operations.

In 210, a 2D ultrasound image of a subject may be obtained.

The subject refers to an entity undergoing an ultrasound scan. In some embodiments, the subject may include an animal body, a human body, a phantom, or the like.

The 2D ultrasound image (also referred to as a 2D ultrasound section) refers to an image representing an internal structure of a specific 2D section of the subject acquired by an ultrasound device scanning a target tissue of the subject with the ultrasound probe at a certain position and an orientation In some embodiments, the target tissue may include the heart, the liver, or the like. For example, the 2D ultrasound image of the subject may be an image of a heart region of the subject. As another example, the 2D ultrasound image of the subject may be an image of an abdominal region of the subject. As another example, the 2D ultrasound image of the subject may be an image of a liver region of the subject.

In some embodiments, after obtaining the 2D ultrasound image, the processor may analyze the 2D ultrasound image to determine one or more target regions in the 2D ultrasound image. The target region may be a region of interest in the 2D ultrasound image. For example, if the 2D ultrasound image is an image of the heart region of the subject, the target region may include an interventricular septum, a left ventricle, a right ventricle, other chambers, or the like.

In some embodiments, the processor may perform image segmentation on the 2D ultrasound image to determine the one or more target regions in the 2D ultrasound image. Image segmentation refers to the process of partitioning a digital image into multiple segments (sets of pixels, e.g., the target regions) with specific semantics representing the categories of the multiple segments. For example, each of the one or more target regions segmented from the 2D ultrasound image may be marked with a label representing the category of the tissues in the target region. In some embodiments, the processor may input the 2D ultrasound image into a pre-trained segmentation model, and perform the segmentation process on the 2D ultrasound image through the segmentation model to obtain the one or more target regions in the 2D ultrasound image.

In some embodiments, the processor may segment the 2D ultrasound image using an image segmentation algorithm, such as a threshold-based segmentation algorithm, an edge-based segmentation algorithm, etc.

In some embodiments, the processor may obtain the 2D ultrasound image via the ultrasound probe. If the ultrasound probe in the ultrasound imaging system is a handheld probe, an operator holds the ultrasound probe to scan the subject. The ultrasound probe uploads the collected ultrasound echo signals to the processor, and the processor may reconstruct the 2D ultrasound image based on the ultrasound echo signals. If the ultrasound probe in the ultrasound imaging system is an automatic probe, the processor sends control information to the ultrasound probe to control the probe to scan the subject to obtain the 2D ultrasound image.

In some embodiments, the 2D ultrasound image may be pre-obtained and stored in a storage device. For example, the processor may obtain the 2D ultrasound slice of the subject from a storage device of an image device post-processing workstation via the communication interface. As another example, the processor may obtain the 2D ultrasound image of the subject from a storage device of a Picture Archiving and Communication Systems (PACS), a cloud server, or other servers. As still another example, the 2D ultrasound image may be pre-stored in a non-volatile storage medium of the computer device, and the processor may directly retrieve the 2D ultrasound image when needed. The present disclosure does not limit the specific manner of obtaining the 2D ultrasound image.

In 220, a target 3D model of the subject may be obtained. The target 3D model may represent anatomical structure information associated with the subject.

The anatomical structure information refers to a morphology (e.g., geometric shape, size, etc.) and/or spatial positional relationship of tissues or organs associated with the subject.

The target 3D model refers to a digital 3D geometric representation of the anatomical structure. In some embodiments, the target 3D model may be described by a grid or point cloud composed of a plurality of vertices, edges, and faces, capable of reproducing a 3D morphology and spatial positional relationship of the anatomical structure.

As used herein, the target 3D model representing at least a portion of anatomical structure information associated with the subject refers to that the target 3D model represents features of an anatomical structure of the subject or a standard anatomical structure corresponding to the anatomical structure of the subject.

In some embodiments, the target 3D model may be a generic 3D model associated with the subject (also referred to as a standard 3D model associated with the subject). The generic 3D model associated with the subject may be used to describe a standard anatomical structure corresponding to the anatomical structure of the subject. If the subject is the heart, the corresponding generic 3D model of the subject may be a generic heart 3D model. The generic 3D model may be constructed based on prior knowledge associated with the anatomical structure of the subject in the 2D ultrasound image of the subject. For example, the generic 3D model associated with the subject describing the standard anatomical structure corresponding to the anatomical structure of the subject may be constructed based on average features of the anatomical structure from different individuals.

In some embodiments, the target 3D model may be a personalized 3D model. The personalized model may represent features of the anatomical structure of the subject. That is, the target 3D model may be a 3D model determined based on medical image data of the subject (e.g., Computed Tomography (CT) data, Magnetic Resonance Imaging (MRI) data, or other data). In some embodiments, the medical image data may be historical data of the subject. The historical data of the subject may include a 3D ultrasound image, a Computed Tomography (CT) image, a Magnetic Resonance Imaging (MRI) image, etc. In some embodiments, the medical image data may be acquired within the same time period as the 2D ultrasound image. The length of the time period may be less than a threshold, such as one day, one week, one month, etc.

The processor may obtain the target 3D model in various ways. For example, the generic 3D model may be pre-stored in the computer device, and the processor may call the generic 3D model. As another example, the processor may generate the target 3D model by performing image segmentation and 3D reconstruction based on medical image data (e.g., 2D CT images, 2D MRI images, etc.) preoperatively collected from the subject.

In some embodiments, the processor may determine a motion phase of the 2D ultrasound image, and determine the target 3D model from a 3D model sequence based on the motion phase of the 2D ultrasound image. The motion phase of the 2D ultrasound image refers to a motion phase where the subject belongs to at the time when the 2D ultrasound image is acquired. The motion phase of the target 3D model is the same as or matches the motion phase of the 2D ultrasound image. As described herein, two matching motion phases may refer to a similarity between motion state information (e.g., a motion amplitude, a motion speed, etc.) corresponding to the two motion phases being greater than a similarity threshold (e.g., 90%, 95%, etc.).

A motion cycle may include multiple motion phases. In some embodiments, the motion cycle may be divided into the multiple motion phases based on a motion state. The motion state may be defined by morphological feature information (e.g., the shape, the size, etc., of different tissues), motion feature information (e.g., a motion amplitude, a motion speed, etc.) and/or physiological status information (e.g., pressure, etc.). For example, when the subject is the heart, according to a cardiac cycle, the motion phases may include, but are not limited to, an isovolumic contraction phase, an ejection phase, an isovolumic relaxation phase, a rapid filling phase, a slow filling phase, an atrial contraction phase, etc. As another example, when the subject is the liver, the motion phases may include, but are not limited to, a portal venous phase, an arterial phase, etc. In some embodiments, the motion cycle may be divided into the multiple motion phases according to a default setting rule, e.g., dividing the motion cycle into equal parts.

In some embodiments, the motion phases of the motion cycle of the subject may be a default setting.

The 3D model sequence may include a series of 3D models and each of the 3D models may correspond to a motion phase of the motion cycle. The 3D model sequence may also be referred to as a 4D model. The processor may determine the target 3D model from the series of 3D models whose motion phase is the same as or match the motion phase of the 2D ultrasound image. For example, the processor may determine the motion state information of the subject from the 2D ultrasound image and determine the motion phase of the 2D ultrasound image based on the motion state information. A correspondence relationship between the motion state information and the motion phase is a default setting of the system. The processor may determine the motion phase of the 2D ultrasound image based on the motion state information identified from the 2D ultrasound image and the correspondence relationship between the motion state information and the motion phase.

For example, the motion phase of the 2D ultrasound image may be determined based on a morphological feature of the subject in the 2D ultrasound image. The morphological feature may refer to a shape, a size, etc., of each of different target regions in the subject. For example, the motion phase of the 2D ultrasound image may be determined by matching a shape feature of each of different target regions determined in the 2D ultrasound image with a preset shape feature corresponding to each of different motion phases.

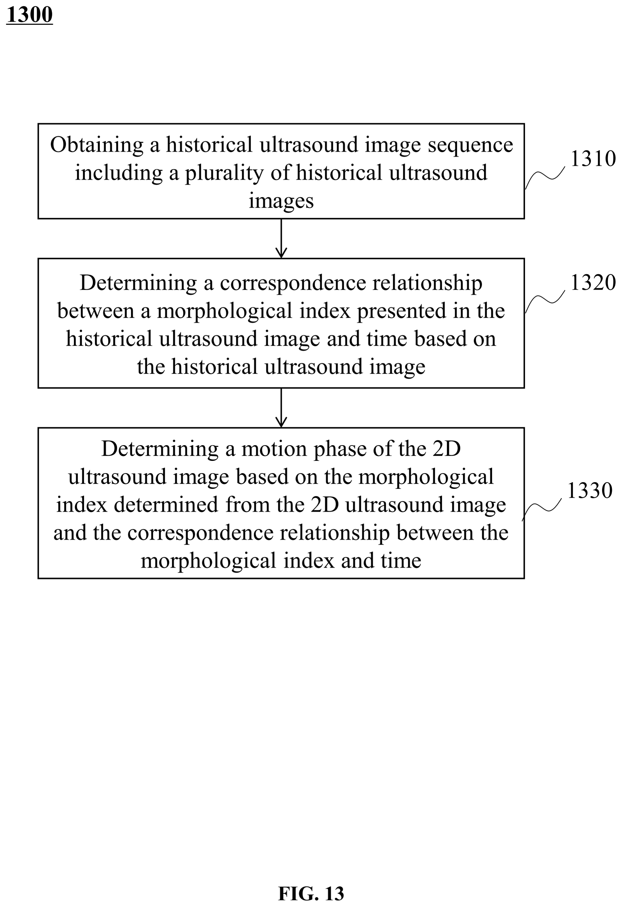

In some embodiments, a morphological index may be determined based on the morphological feature of the subject in the 2D ultrasound image, and a correspondence relationship between the morphological index and time may be obtained. Then the motion phase of the 2D ultrasound image may be determined based on the morphological index of the subject in the 2D ultrasound image and the correspondence relationship between the morphological index and time. The morphological index may be a quantitative index of the morphological feature. The correspondence relationship between the morphological index and time may be set by default in the system. In some embodiments, different subjects may correspond to different correspondence relationships between the morphological index and time. In some embodiments, different subjects may correspond to the same correspondence relationships between the morphological index and time. More descriptions of determining the motion phase based on the morphological index may be found in FIG. 13.

In 230, a transformed target 3D model may be obtained by transforming the target 3D model based on the 2D ultrasound image to align the target 3D model with the 2D ultrasound image.

The transformed target 3D model refers to a 3D model obtained after the target 3D model undergoes transformation processing, in which a 2D tomographic slice corresponding to the 2D ultrasound image in the transformed target 3D model is aligned with the 2D ultrasound image in space and/or morphology. the 2D tomographic slice corresponding to the 2D ultrasound image refers to the 2D tomographic slice and the 2D ultrasound image which represent the same slice of the subject.

It should be understood that the transformed target 3D model has established a correct correspondence relationship with the 2D ultrasound image in space. If a virtual cut is performed on the transformed target 3D model along an identical spatial plane and orientation as used to acquire the 2D ultrasound image a resulting virtual 2D tomographic image (i.e., 2D tomographic slice) would highly match the 2D ultrasound image in terms of anatomical structure.

The processor may transform the target 3D model using at least one of the first transformation model, the second transformation model, and the third transformation model described elsewhere in the present disclosure to obtain the transformed target 3D model.

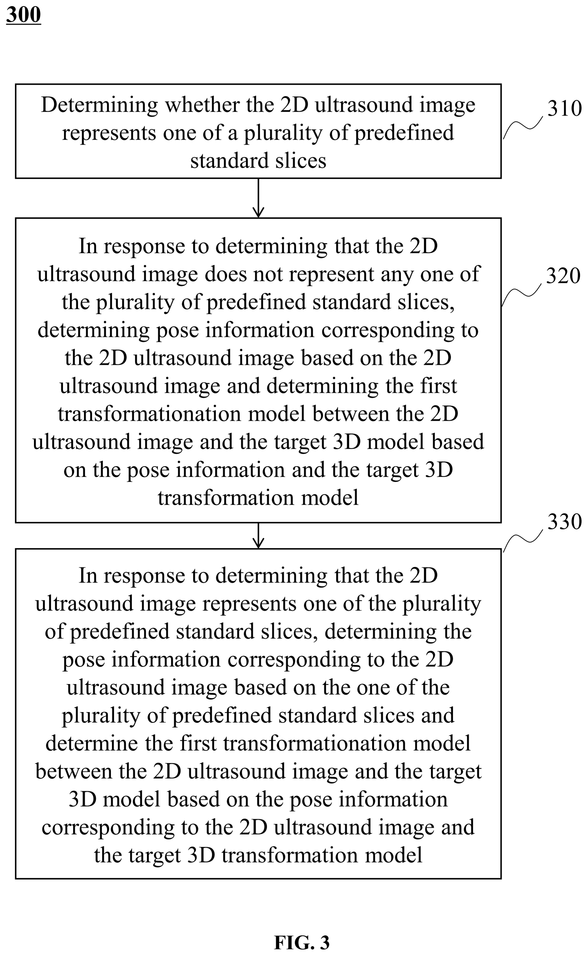

For example, the processor may determine a first transformation model between the 2D ultrasound image and the target 3D model based on one or more anatomical semantic features of the subject, and apply the first transformation model to the target 3D model to obtain the transformed target 3D model. More descriptions for transforming the target 3D model based on the first transformation model, reference may be made to the detailed description in FIG. 3.

The anatomical semantic feature is attribute data in an ultrasound image that may identify and distinguish a specific anatomical structure (e.g., a tissue represented by each of the one or more target regions segmented from the 2D ultrasound image). The anatomical semantic feature may include a morphological feature of the anatomical structure and an anatomical identity corresponding to the morphological feature. The morphological feature may include at least one of a size of each of one or more target regions in the anatomical structure, an anatomical feature point (e.g., a center of gravity of each of one or more target regions in the anatomical structure), a contour point describing a contour of each of one or more target regions in the anatomical structure, etc. The identity of each of the one or more target regions in the anatomical structure (e.g., a name) may indicate what tissue in the target region is.

The size of a target region in the anatomical structure may be a quantifiable geometric measurement value, e.g., a length, an area, a distance between a center of gravity and a contour, etc., of the target region. As a further example, if the anatomical structure is the heart, the size may include a thickness of a heart wall, a diameter of a heart chamber, an area of a valve orifice, etc.

In some embodiments, the processor may measure a size of each of the one or more target regions after identifying the target regions in the 2D ultrasound image.

In some embodiments, the processor may determine contour points of one or more target regions through edge detection or the like.

In some embodiments, the processor may calculate an anatomical feature point based on a geometric feature of the contour. For example, if the subject is the heart, the anatomical feature point may include the apex of the heart, the base of the heart, the notch of the apex of the heart, the points on the atrioventricular groove, etc.

In some embodiments, the processor may input the 2D ultrasound image into a pre-trained measurement model (also referred to a first trained machine learning model), and determine the one or more anatomical semantic features of the subject through processing of the 2D ultrasound image by the measurement model. An input of the measurement model may include the 2D ultrasound image, and an output of the measurement model may include the one or more anatomical semantic features of each of one or more target regions.

In some embodiments, the processor may train an initial machine learning model based on a plurality of first training samples with first labels to obtain the measurement model. A first training sample may include a sample 2D ultrasound image. The sample 2D ultrasound image may be a 2D ultrasound image from a plurality of historical 2D ultrasound images that may provide rich anatomical information for model training. The first training sample may be obtained by manual selection. The first label of the first training sample may be determined by manual annotation.

In some embodiments, the processor may input each of the plurality of first training samples with the first labels into the initial machine learning model, construct a loss function based on an output result of the initial machine learning model and a first label corresponding to each of the plurality of first training samples, and iteratively update parameters of the initial machine learning model based on the loss function through gradient descent or other methods. When a termination condition is satisfied, the trained measurement model is obtained. The termination condition may be convergence of the loss function, a count of iterations reaching a threshold, etc.

This embodiment does not limit the specific method for determining the anatomical semantic features of the subject, as long as its function may be achieved.

The first transformation model may be a transformation model used for transforming the 2D ultrasound image and the target 3D model. The transformation model may describe a spatial mapping relationship for aligning a 3D spatial coordinate system of the target 3D model with a 2D spatial coordinate system in which the 2D ultrasound image resides.

In some embodiments, the processor may determine the first transformation model by determining a 2D tomographic image from the target 3D model based on an anatomical semantic feature of the subject, determining multiple pairs of anatomical semantic features from the 2D ultrasound image and the 2D tomographic image, and determining the first transformation model between the 2D ultrasound image and the target 3D model based on the multiple pairs of anatomical semantic features. Each pair of anatomical semantic features includes a first anatomical semantic feature from the 2D ultrasound image and a second anatomical semantic feature from the 2D tomographic image. The first anatomical semantic feature and the second anatomical semantic feature correspond to a same region of a same slice in the subject.

The 2D tomographic image refers to a 2D image determine from the target 3D model. It should be understood that the 2D tomographic image is a cross-sectional view of the target 3D model on a specific spatial plane (e.g., a specific position and orientation). The 2D tomographic image and the 2D ultrasound image may represent the same slice in the subject

In some embodiments, the processor may determine the 2D tomographic image from the target 3D model by feeding the 2D ultrasound image into a trained machine learning model (also referred to as a second trained machine learning model).

The second trained machine learning model may predict pose information (e.g., an spatial position and a orientation) of the 2D tomographic image in the target 3D model based on the input 2D ultrasound image, to obtain the 2D tomographic image that represents the same slice in the subject as the 2D ultrasound image. The spatial position may be coordinates of a center point of a slice (e.g., the 2D ultrasound image or the 2D tomographic image) in a 3D coordinate system of the target 3D model. The orientation may be an orientation of the slice (e.g., an orientation of a normal vector of the slice).

In some embodiments, the second trained machine learning model may include any one or a combination of a Convolutional Neural Networks (CNN) model, a Neural Networks (NN) model, or other custom model structures. An input of the second trained machine learning model includes the 2D ultrasound image and the target 3D model. An output of the second trained machine learning model includes the spatial position and the orientation of the 2D tomographic image or the 2D tomographic image.

In some embodiments, the processor may train an initial machine learning model based on a plurality of second training samples with second labels to obtain the second trained machine learning model. A second training sample includes a sample 2D ultrasound image and a sample 3D model of a sample subject. The second label of the second training sample includes a reference spatial position and a reference orientation of a reference 2D tomographic image in the sample 3D model that, together with the sample 2D ultrasound image, represents a same slice in the sample subject. The second training samples may be obtained based on historical data. The second labels may be obtained by manual annotation.

A training process of the second trained machine learning model is similar to the training process of the aforementioned measurement model, which is not repeated here.

In some embodiments, after obtaining the spatial position and the pose of the 2D tomographic image, the processor may perform a 3D resampling or a virtual slicing operation on the target 3D model based on the spatial position and the orientation of the 2D tomographic image. Merely by way of example, the processor may define a sampling plane in the target 3D model using the spatial position and the orientation, and calculate values of various pixel points on the plane through an interpolation algorithm (e.g., linear interpolation or cubic spline interpolation) to generate the 2D tomographic image.

In some embodiments of the present disclosure, by using the trained machine learning model to directly generate the spatial position and the orientation of the 2D tomographic image, efficiency and automation of determining the 2D tomographic image can be significantly improved. Furthermore, better robustness and accuracy can be demonstrated when facing complex images or anatomical structure variations.

The first anatomical semantic feature and the second anatomical semantic feature constitute a corresponding pair of anatomical semantic features. The first anatomical semantic feature and the second anatomical semantic feature in the same pair may correspond to a same region of a same slice in the subject. For example, in a pair of anatomical semantic features, if the first anatomical semantic feature is a centroid coordinate of a "left ventricular region" in the 2D ultrasound image, then the second anatomical semantic feature is a centroid coordinate of the "left ventricular region" in the 2D tomographic image of the target 3D model.

In some embodiments, the processor may respectively input the 2D ultrasound image and/or the 2D tomographic image into the pre-trained measurement model, and determine the multiple pairs of anatomical semantic features through processing of the 2D ultrasound image and the 2D tomographic image by the measurement model.

In some embodiments, the processor may input the 2D ultrasound image into the pre-trained measurement model and determine the first anatomical semantic feature from the 2D ultrasound image using the pre-trained measurement model. Then the processor may determine the second anatomical semantic feature corresponding to the first anatomical semantic feature from the 2D tomographic image based on the first anatomical semantic feature. For example, each of different regions in the 2D tomographic image may be marked with a reference identity representing the category of tissues in the region and the reference morphological feature of each of the different regions in the 2D tomographic image may be stored in a storage device. The processor may determine the second anatomical semantic feature corresponding to the first anatomical semantic feature by determining a reference morphological feature corresponding to the reference identity that is the same as the identity in the first anatomical semantic feature.

In some embodiments, the processor may determine a deformation mapping function between the 2D ultrasound image and the target 3D model as the first transformation model based on the multiple pairs of anatomical semantic features.

In some embodiments, the processor may determine the first transformation model by minimizing a sum of first distances.

Each of the first distances is a distance between the first anatomical semantic feature and a transformed second anatomical semantic feature in each pair after the second anatomical semantic feature is transformed using an intermediate first transformation model generated during minimizing the sum of first distances.

Merely by way of example, the processor may set an initial first transformation model, and then perform an iterative process to optimize the initial first transformation model based on an objective function (also referred to as a first objective function) to obtain the final first transformation model. The optimization objective of the objective function may be minimizing the sum of first distances between the first anatomical semantic feature and a transformed second anatomical semantic feature in each pair after the second anatomical semantic feature is transformed using the first transformation model or the intermediate first transformation model generated during minimizing the sum of first distances. The independent variable of the objective function may be registration parameters of the first transformation model.

In each iteration, the processor may apply the intermediate first transformation model (or the initial first transformation model) to all second anatomical semantic features to obtain multiple transformed second anatomical semantic features, calculate first distances each of which is between a transformed second anatomical semantic feature and a corresponding first anatomical semantic feature, and sum the first distances. In response to determining that a termination condition is not satisfied, the processor updates the intermediate first transformation model (or updates the initial first transformation model ) to obtain an updated the intermediate first transformation model according to the sum of the first distances through an optimization algorithm (e.g., a gradient descent method or a Levenberg-Marquardt algorithm) and designate the updated intermediate first transformation model as the intermediate first transformation model or the initial first transformation model used in the next iteration, to reduce the sum of the first distances in a next iteration. The iterative process continues until the termination condition is satisfied (e.g., the sum of the first distances converges to a threshold or a maximum count of iterations is reached). The updated intermediate first transformation model generated in the last iteration is determined as the final first transformation model.

In some embodiments of the present disclosure, by constructing the process of determining the first transformation model as an optimization problem of minimizing a sum of the first distances, the first transformation model that achieves a globally optimal match among all identified anatomical semantic features can be found, improving overall accuracy and reliability of the transformation.

In some embodiments, the processor may determine the first transformation model according to a pose of the ultrasound probe at the time when the 2D ultrasound image is acquired. More descriptions for determining the first transformation model based on the pose of the ultrasound probe at the time when the 2D ultrasound image is acquired may be found in FIG. 3 and its related description.

In some embodiments, the processor may apply the first transformation model to the target 3D model to obtain the transformed target 3D model. As another example, the processor may apply the first transformation model on the 2D tomographic image in the target 3D model to update an anatomical semantic feature of the 2D tomographic image in the target 3D model, to obtain the transformed target 3D model.

In some embodiments of the present disclosure, determining the first transformation model through high-level anatomical semantic features enables obtaining a more robust and clinically significant transformed target 3D model, significantly improving the accuracy and reliability of the transformation in cases of poor image quality or anatomical variations.

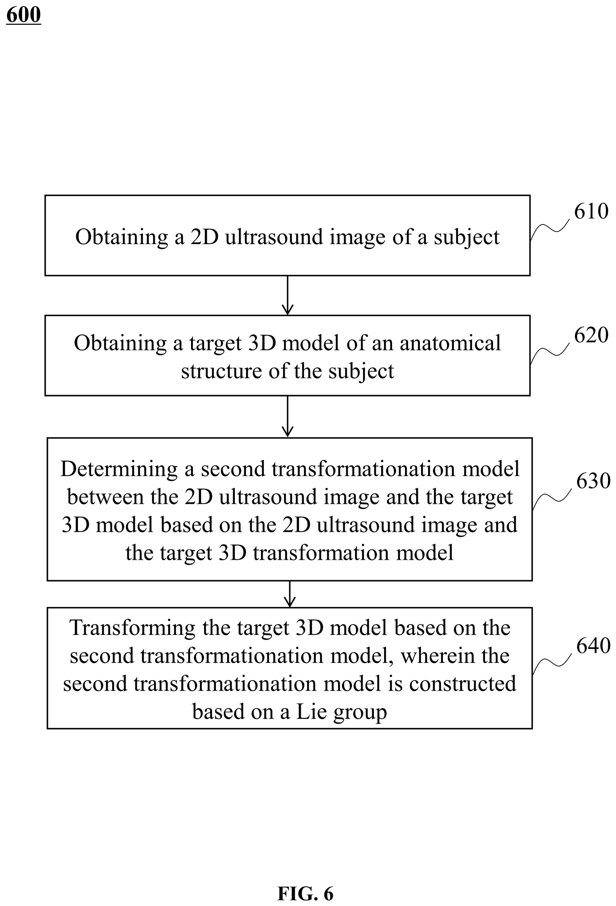

In some embodiments, the processor may also obtain the transformed target 3D model based on the second transformation model. The second transformation model may be constructed based on Lie group. For example, the second transformation model includes a plurality of registration parameters. The plurality of registration parameters includes at least one of a scale parameter, a rotation parameter (e.g., a rotation matrix), and a translation parameter (e.g., a translation vector). The rotation parameter may belong to the Lie group. For more description regarding the second transformation model, refer to FIG. 6 and its related description.

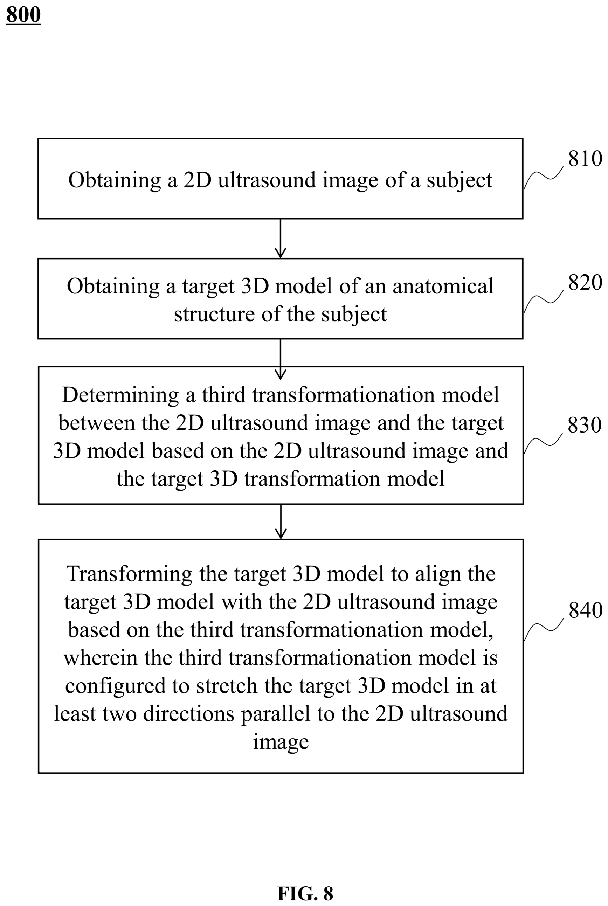

In some embodiments, the processor may obtain the transformed target 3D model based on the third transformation model. The third transformation model may constructed to stretch the target 3D model in at least two directions parallel to the 2D ultrasound image. The third transformation model includes a plurality of registration parameters. The plurality of registration parameters includes an affine matrix and a translation vector. The affine matrix may approximate a rotation matrix. More descriptions regarding the third transformation model may be found in FIG. 8 and its related description.

In some embodiments, the processor may first apply the first transformation model on the target 3D model, and then apply the second transformation model on the transformed target 3D model transformed by the first transformation model. In some embodiments, the processor may first apply the second transformation model to the target 3D model, and then perform transformation using the third transformation model. In some embodiments, the processor may first apply the first transformation model to the target 3D model for transformation, and then perform transformation using the third transformation model. Alternatively, the processor may first perform transformation using the third transformation model, and then perform transformation using the second transformation model.

In some embodiments, the processor may first apply the first transformation model to the target 3D model for transformation, then perform transformation using the second transformation model, and finally perform transformation using the third transformation model.

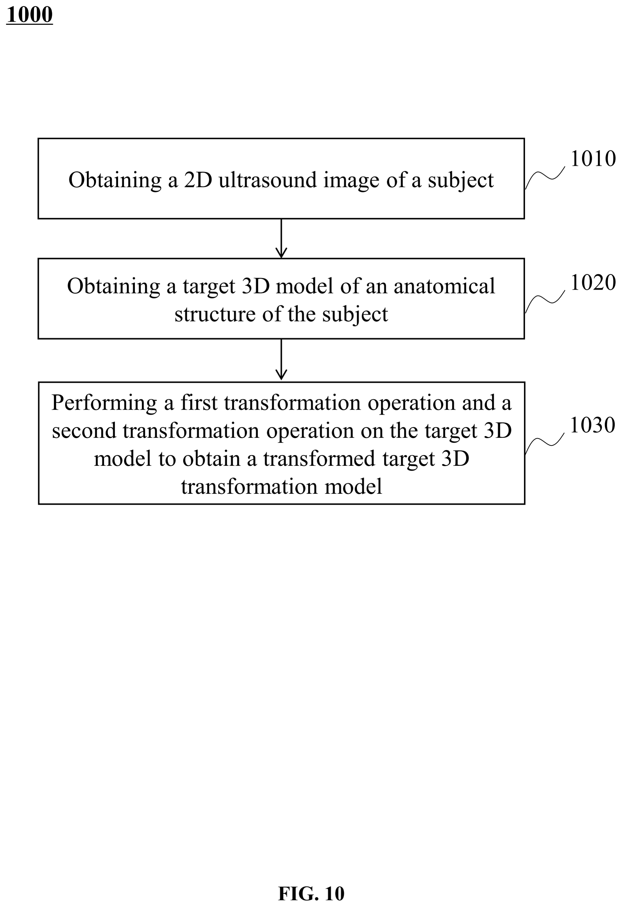

In some embodiments, the processor may also perform a first transformation operation and a second transformation operation between the 2D ultrasound image and the target 3D model to obtain the transformed target 3D model. More descriptions performing the first transformation operation and the second transformation operation on the target 3D model may be found in FIG. 10 and its related description.

In 240, a target 3D image of the subject may be generated based on the transformed target 3D model and/or the 2D ultrasound image.

In some embodiments, operation 240 may be omitted or deleted from process 200.

The target 3D image may be a 3D image representing the target tissue of the subject.

In some embodiments, the target 3D image may be the transformed target 3D model fused with the 2D ultrasound image. For example, the target 3D image may be generated by fusing the 2D ultrasound image and the transformed target 3D model using an image fusion algorithm.

In some embodiments, the target 3D image may be a 3D image generated by marking a spatial position and an attitude of the 2D ultrasound image on the transformed target 3D model.

In some embodiments, the target 3D image may be a 3D image generated by rendering the transformed target 3D model.

In some embodiments, the transformed target 3D model may be presented as the target 3D image.

The processor may generate the target 3D image of the subject based on the transformed target 3D model. For example, the processor may use the transformed target 3D model as the target 3D image.

In some embodiments, after determining the target 3D image of the subject, the processor may display at least one of the target 3D image the transformed target 3D model, or the 2D ultrasound image on a display interface of a terminal. The operator may perform operations such as zooming in, zooming out, and rotating on the displayed target 3D image and/or the transformed target 3D model, which facilitates the operator to observe the 3D structure of the subject more clearly and discover hidden problems or lesion areas of the subject.

In some embodiments, the processor may also perform surgical navigation based on the transformed target 3D model and/or the target 3D image. For example, the processor may display a guidance direction of the ultrasound probe on the transformed target 3D model and/or the target 3D image.

In some embodiments of the present disclosure, by acquiring the 2D ultrasound image and transforming it with the 3D model to generate a final target 3D image, the obtained target 3D image is made closer to an actual image of the subject. This method enables presenting an abstract 2D ultrasound image, which provides only single-plane information, within a complete, 3D anatomical context, greatly enhancing the spatial positioning sense and structural comprehension ability of the operator regarding a current scanning location, allowing the operator to more clearly understand the 3D structure of the subject and discover hidden problems or lesion areas of the subject.

FIG. 3 is a flowchart of an exemplary process for determining a first transformation model according to some embodiments of the present disclosure. The process 300 includes the following operations.

In 310, whether the 2D ultrasound image represents one of a plurality of predefined standard slices may be determined. Whether the 2D ultrasound image represents to one of the plurality of predefined standard slices may indicate whether a position of a slice corresponding to the 2D ultrasound image is consistent with a position of the predefined standard slice.

For descriptions of the 2D ultrasound image and the predefined standard slice, refer to FIG. 2 and its related description.

The predefined standard slice refers to a predefined standardized slice in ultrasound scanning.

In some embodiments, each predefined standard slice corresponds to a standard pose and attitude of an ultrasound probe (i.e., a standard pose).

The standard pose of the ultrasound probe of the refers to a spatial position and attitude used for acquiring a specific predefined standard slice.

In some embodiments, the predefined standard slice and a corresponding standard pose of the ultrasound probe are predetermined based on CT data or MRI data, etc., of the subject.

In some embodiments, the processor may determine whether the 2D ultrasound image represents one of the plurality of predefined standard slices by using an image similarity-based comparison. For example, the processor may calculate an image similarity (e.g., a similarity score) between the 2D ultrasound image and the plurality of predefined standard slices, and determine whether a highest similarity score is not less than a similarity threshold. If the highest similarity score is not less than the similarity threshold, the processor determines that the 2D ultrasound image represents one of the plurality of predefined standard slices corresponding to the similarity score. If the highest similarity score is less than the similarity threshold, the processor determines that the 2D ultrasound image does not represent any one of the plurality of predefined standard slices.

In some embodiments, the processor may input the 2D ultrasound image into a recognition model, and perform a recognition process on whether the 2D ultrasound image represents one of the plurality of predefined standard slices through the recognition model to obtain a recognition result. The recognition result includes that the 2D ultrasound image represents one of the multiple predefined standard slice or that the 2D ultrasound image does not represent any one of the plurality of predefined standard slices.

In some embodiments, the recognition model may be a trained machine learning model. The recognition model may be obtained by training based on a large count of labeled 2D ultrasound images, wherein a label may be a predefined standard slice category to which the 2D ultrasound image represents.

In 320, in response to determining that the 2D ultrasound image does not represent any one of the plurality of predefined standard slices, determining pose information corresponding to the 2D ultrasound image based on the 2D ultrasound image and determine the first transform model based on the pose information and the target 3D model or determine anatomical semantic features of the subject based on the 2D ultrasound image, and determine the first transformation model between the 2D ultrasound image and the target 3D model based on the anatomical semantic features of the subject. For descriptions of the target 3D model, the anatomical semantic features, and the first transformation model, refer to FIG. 2 and its related description.

The pose information corresponding to the 2D ultrasound image refer to a pose of the ultrasound probe when acquiring the 2D ultrasound image. The pose information of the ultrasound probe when acquiring an ultrasound image may include a position and an orientation of the ultrasound probe in a 3D space.

In some embodiments, the processor may determine the pose information of the ultrasound probe when acquiring the 2D ultrasound image based on a pose determination model, and determine the first transformation model based on the pose information.

The pose determination model may include any one or a combination of a Convolutional Neural Networks (CNN) model, a Long Short-Term Memory (LSTM) model, or other custom model structures.

In some embodiments, the processor may train the pose determination model using a gradient descent method based on third training samples with third labels. Each of the third training samples may include a sample 2D ultrasound image. The third label of the third training sample may be actual pose information of the ultrasound probe when acquiring the sample 2D ultrasound image. The third training sample may be obtained based on historical data. The third label may be determined based on manual annotation. In some embodiments, the actual pose information of the ultrasound probe when acquiring the sample 2D ultrasound image may be acquired by a sensor (e.g., a pose sensor, a displacement sensor, a rotation encoder, a laser sensor, an inertial measurement unit, etc.) arranged in the ultrasound probe.

A training process of the pose determination model is similar to the training process of the aforementioned measurement model, and is not repeated here.

The first transformation model may include a translation parameter, a rotation parameter, etc. The first transformation model may be configured to transform a coordinate system of the target 3D model to a coordinate system of the 2D ultrasound image. The coordinate system of the 2D ultrasound image is related to the orientation and the position of the ultrasound probe when the 2D ultrasound image is acquired. The processor may determine the translation parameter based on the position of the ultrasound probe in the pose information and the origin of the coordinate system of the target 3D model. The translation parameter includes a parameter for performing a translation vector on the coordinate system of the target 3D model (e.g., the origin of the coordinate system of the target 3D model) to the coordinate system of the 2D ultrasound image (e.g., to the position of the ultrasound probe). The processor may determine the rotation parameter based on the orientation of the ultrasound probe in the pose information and the directions of coordinate axes of the coordinate system of target 3D model. The rotation parameter includes a rotation matrix for rotating the coordinate system of the target 3D model (e.g., the directions of coordinate axes of the coordinate system of target 3D model) to the coordinate system of the 2D ultrasound image (i.e., to the orientation of the ultrasound probe in the pose information).

More description of determining the first transformation model between the 2D ultrasound image and the target 3D model based on anatomical semantic features of the subject, may be found elsewhere in the present disclosure (e.g., FIG. 2, FIG. 14 and FIG. 15 and related descriptions).

In 330, in response to determining that the 2D ultrasound image represents one of the plurality of predefined standard slices, determining the pose information corresponding to the 2D ultrasound image based on the one of the plurality of predefined standard slices and determine the first transformation model between the 2D ultrasound image and the target 3D model based on the pose information corresponding to the 2D ultrasound image and the target 3D model.

In response to determining that the 2D ultrasound image represents one of the plurality of predefined standard slices, a standard pose of an ultrasound probe corresponding to the one of the plurality of predefined standard slices may be designated as the pose information corresponding to the 2D ultrasound image.

In some embodiments, in response to determining that the 2D ultrasound image represents one of the plurality of predefined standard slices, the processor may determine at least part of registration parameters in the first transformation model based on the standard pose of the ultrasound probe corresponding to the predefined standard slice. For example, the first transformation model includes the translation parameter and the rotation parameter. The translation parameter may be determined based on the position of the ultrasound probe in the standard pose and the origin of the coordinate system of the target 3D model. The translation parameter includes a translation matrix for transforming the coordinate system of the target 3D model (e.g., the origin of the coordinate system of the target 3D model) to the coordinate system of the 2D ultrasound image (i.e., to the position of the ultrasound probe in the standard pose). The translation matrix is related to the position of the ultrasound probe when the 2D ultrasound image is acquired. The rotation parameter may be determined based on the orientation of the ultrasound probe in the standard pose and the directions of coordinate axes of the coordinate system of the target 3D model. The rotation parameter includes a rotation matrix for transforming the coordinate system of the target 3D model (i.e., the directions of coordinate axes of the coordinate system of the target 3D model) to the coordinate system of the 2D ultrasound image (i.e., to the orientation of the ultrasound probe in the standard pose). The rotation matrix is related to the orientation of the ultrasound probe when the 2D ultrasound image is acquired.

In some embodiments of the present disclosure, by providing a predefined standard slice, a path for quickly determining the first transformation model is provided, which can significantly improve transformation efficiency. Since the standard pose is set in a standardized manner, the first transformation model determined in this way has high accuracy and repeatability, avoiding failures or errors that may occur in an automatic transformation algorithm.

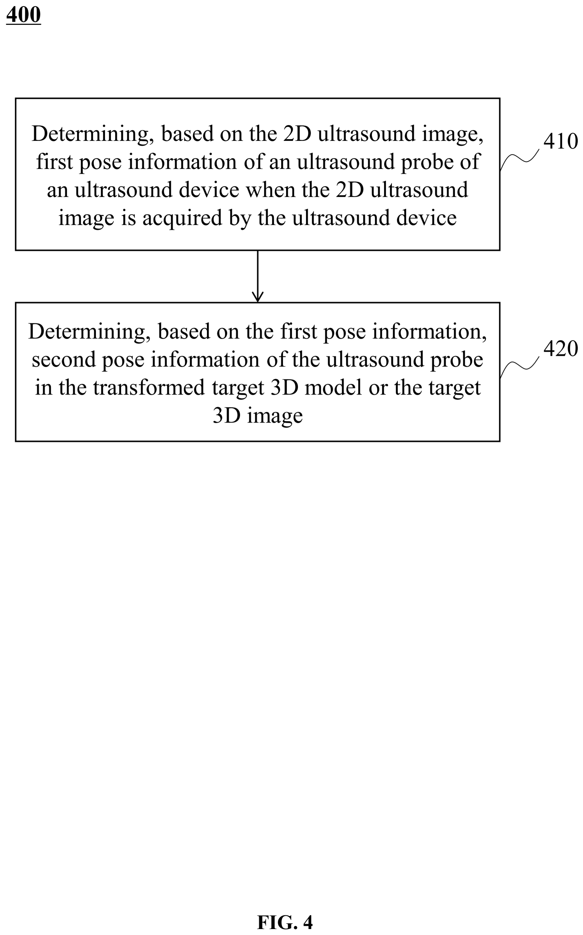

FIG. 4 is a flowchart of an exemplary process for determining second pose information according to some embodiments of the present disclosure. The process 400 includes the following operations.

In 410, first pose information of the ultrasound probe of the ultrasound device when the 2D ultrasound image is acquired by the ultrasound device may be determined based on the 2D ultrasound image.

For a description of the 2D ultrasound image, refer to FIG. 2 and related descriptions.

The first pose information refers to a spatial position and an attitude (i.e., an orientation) of the ultrasound probe when the 2D ultrasound image is acquired.

In some embodiments, the processor may determine whether the 2D ultrasound image represents one of the plurality of predefined standard slices. Whether the 2D ultrasound image represents one of the plurality of predefined standard slices indicates whether a position and orientation of a slice corresponding to the 2D ultrasound image is consistent with a position and orientation of the predefined standard slice.

In response to determining that the 2D ultrasound image does not represent any one of the plurality of predefined standard slices, the processor determines the first pose information based on the 2D ultrasound image. In response to determining that the 2D ultrasound image represents one of the plurality of predefined standard slices, the processor determines the first pose information based on the standard pose of the ultrasound probe corresponding to the predefined standard slice.

When the processor determines that the 2D ultrasound image does not represent any one of the plurality of predefined standard slices, the processor may determine pose information of the ultrasound probe when acquiring the 2D ultrasound image based on the pose determination model.

When the processor determines that the 2D ultrasound image represents a predefined standard slice, a standard pose of the ultrasound probe corresponding to the predefined standard slice may be determined as the first pose information. The predefined standard slice and the corresponding standard pose of the ultrasound probe are predetermined based on CT data or MRI data of the subject.

In some embodiments of the present disclosure, the first pose information is determined by judging whether the 2D ultrasound image represents one of the plurality of predefined standard slices, which combines efficiency and flexibility.

In 420, the second pose information of the ultrasound probe in the transformed target 3D model or the target 3D image may be determined based on the first pose information.

For a description of the transformed target 3D model and the target 3D image, refer to FIG. 2 and its related description.

The second pose information refers to a spatial position and an attitude of the ultrasound probe on the transformed target 3D model or the target 3D image, i.e., a position and an attitude in a coordinate system in which the target 3D model is located.

In some embodiments, after acquiring the 2D ultrasound image, the processor may determine the second pose information of the ultrasound probe in the target 3D image and/or the transformed target 3D model based on the first pose information of the ultrasound probe acquired from the 2D ultrasound image. For example, the processor may obtain the second pose information by transforming the first pose information based on the first transformation model.

In some embodiments, the second pose information of the ultrasound probe is marked and displayed in the target 3D image or the transformed target 3D model on the display interface of the computer device.

In some embodiments of the present disclosure, determining and displaying the pose information of the ultrasound probe in the transformed target 3D model or the target 3D image allows an operator to more clearly understand the position of the ultrasound probe during scanning, guiding the operator to adjust the position of the ultrasound probe to obtain a more accurate 2D ultrasound image.

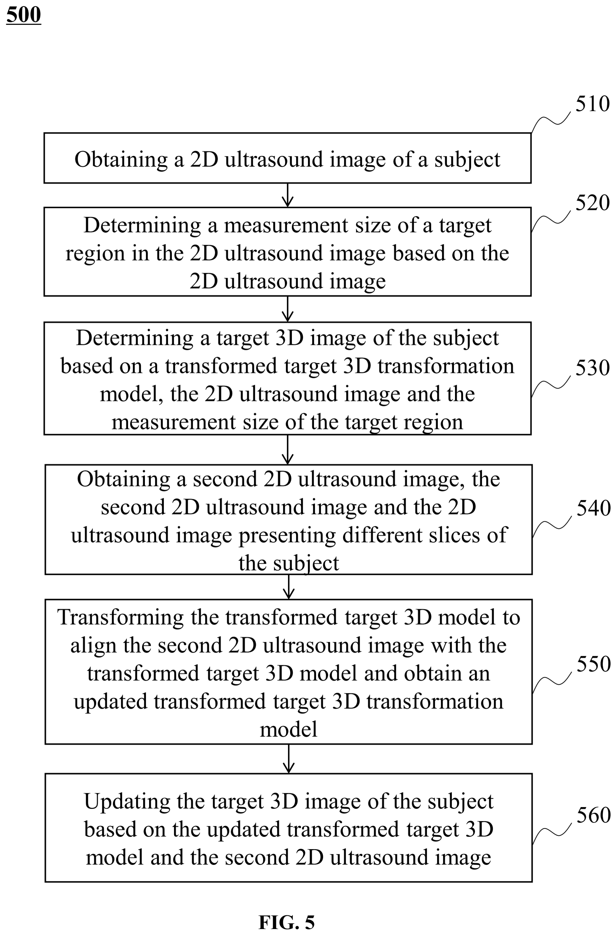

FIG. 5 is a flowchart of an exemplary process for updating a target 3D image according to some embodiments of the present disclosure. The process 500 includes the following operations.

In 510, the 2D ultrasound image of the subject may be obtained.

In 520, a measurement size of a target region in the 2D ultrasound image (i.e., a size of an anatomical structure) may be determined based on the 2D ultrasound image.

In 530, the target 3D image of the subject may be determined based on the 2D ultrasound image, the transformed target 3D model, and the measurement size of the target region.

In 540, a second 2D ultrasound image may be obtained, the second 2D ultrasound image and the 2D ultrasound image presenting different slices of the subject.

The second 2D ultrasound image refers to an ultrasound image acquired by the ultrasound probe after acquiring the first 2D ultrasound image. The second 2D ultrasound image presents a different slice of the subject compared to the 2D ultrasound image. For example, in an orientation direction of the ultrasound probe, the second 2D ultrasound image may be located behind or in front of the first 2D ultrasound image.

An acquisition time of the second 2D ultrasound image may be different from or the same as an acquisition time of the first 2D ultrasound image.

In some embodiments, there may be a plurality of second 2D ultrasound images.

In 550, the transformed target 3D model may be transformed to align the second 2D ultrasound image with the transformed target 3D model and obtain an updated transformed target 3D model.

For a description of the transformed target 3D model, refer to FIG. 2 and its related description.

A transformation process in which the processor transforms the second 2D ultrasound image with the transformed target 3D model is similar to the transformation process described in operation 230. For example, the processor may extract anatomical semantic features from the second 2D ultrasound image and transform the second 2D ultrasound image with the transformed target 3D model based on the anatomical semantic features to obtain the updated transformed target 3D model.

If there are a plurality of second 2D ultrasound images, the processor may sequentially transform each second 2D ultrasound image with the transformed target 3D model to obtain the updated transformed target 3D model.

In some embodiments, updating a size of the transformed target 3D model may be performed before determining the target 3D image of the subject or after determining the target 3D image of the subject.

In 560, the target 3D image of the subject may be updated based on the updated transformed target 3D model and the second 2D ultrasound image.

The processor may update the target 3D image by performing the manner of operation 240 based on the updated transformed target 3D model and the second 2D ultrasound image.

In some embodiments of the present disclosure, performing a plurality of transformations on the target 3D model according to a plurality of 2D ultrasound images corresponding to different planes of the subject enables obtaining a target 3D model that is more adapted to the subject, thereby improving accuracy of the 3D image and allowing an operator to more clearly understand a 3D structure of the subject.

FIG. 6 is a flowchart of an exemplary process for obtaining a transformed target 3D model according to some embodiments of the present disclosure. The process 600 includes the following operations.

In 610, a 2D ultrasound image of the subject may be obtained

Operation 610 may be the same as or similar to operation 210. More descriptions regarding the 2D ultrasound image may be found in FIG. 2 and its related description.

In 620, the target 3D model of the anatomical structure of the subject may be obtained.

Operation 620 may be the same as or similar to operation 220. More descriptions regarding the target 3D model may be found in FIG. 2 and its related description.

In 630, a second transformation model between the 2D ultrasound image and the target 3D model may be determined based on the 2D ultrasound image and the target 3D model.

The second transformation model may be another model for transforming the 2D ultrasound image and the target 3D model.

In some embodiments, the first transformation model may be a transformation model determined based on multiple first pairs of anatomical semantic features (e.g., multiple pairs of anatomical feature points, e.g., anatomical centroids) of the 2D ultrasound image and the target 3D model. The second transformation model may be a transformation model determined based on multiple second pairs of anatomical semantic features (e.g., multiple pairs of anatomical feature points, e.g., anatomical contour points) of the 2D ultrasound image and the target 3D model.

In some embodiments, the first transformation model may be a rigid transformation model; and the second transformation model may be an affine transformation model.

In some embodiments, the second transformation model may be constructed based on a Lie group. That is, the second transformation model is a spatial transformation belonging to a global nonlinear transformation.

For example, the second transformation model includes a plurality of registration parameters. At least one of the plurality of registration parameters belongs to the Lie group. In other words, at least one of the plurality of registration parameters of the second transformation model is an element in the Lie group.

The plurality of registration parameters including a scale parameter, a rotation parameter (e.g., a rotation matrix), a translation parameter (e.g., a translation vector), etc.

The scale parameter is used to scale a size of the target 3D model. The rotation parameter (e.g., a rotation matrix) used to rotate and translate the target 3D model. The translation parameter (e.g., a translation vector) is used to rotate and translate the target 3D model.

At least one of the scale parameter, the rotation parameter (e.g., a rotation matrix), the translation parameter (e.g., a translation vector), etc., belongs to the Lie group. For example, the rotation parameter may be an element in the Lie group. As another example, the translation parameter may be an element in the Lie group. As still another example, the rotation parameter and the translation parameter may be elements in the Lie group.

In some embodiments, the second transformation model may be represented as the following formular (1):

$$S = \begin{bmatrix} s \cdot R & t \\ 0_3^\top & 1 \end{bmatrix} \qquad (1)$$

where R is the rotation matrix. $SO$ (3) refers to a special orthogonal group (i.e., the Lie group) containing the rotation matrix R, which may be referred to as a 3D rotation group. $t \in R^3$ is the translation vector, $s \in R^1$ is the scale parameter, and $0_3^\top$ represents a 1*3 zero matrix. S is in a $4 \times 4$ homogeneous form with a total of 7 degrees of freedom (i.e., 3 degrees of freedom for the rotation matrix, 3 degrees of freedom for the translation vector, and 1 degree of freedom for the scale parameter).

The rotation matrix generally has 3 degrees of freedom, but directly optimizing these 9 parameters is relatively difficult. Therefore, the second transformation model may be constructed based on the Lie group. During the solving process of the second transformation model using an optimization algorithm including an iterative process, Lie algebra parameters of the rotation matrix may be used as optimization variables and optimized in a tangent space of the Lie algebra parameters (i.e., the Lie algebra space). An initial second transformation model may be set. The initial second transformation model may be mapped into initial Lie algebra parameters using an logarithmic map function. Then, in each iteration of the iterative process, through an exponential mapping, the initial Lie algebra parameters is converted into a transformation estimation. The transformation estimation may be used to performed on the 3D target model to generate an intermediate transformed 3D target model. The gradient information related to similarity measure for the initial Lie algebra parameters may be determined based on the intermediate transformed 3D target model and the 2D ultrasound image and mapped into the Lie algebra space. An update of the initial Lie algebra parameters may be determined based on the gradient information in the Lie algebra space using a perturbation model. The updated Lie algebra parameters may be designated as the initial Lie algebra parameters used in the next iteration. In response to determining that a termination condition is satisfied, the initial Lie algebra parameters used in the last iteration may be mapped into the second transformation model using the exponential mapping.

In the present disclosure, constructing the second transformation model based on a Lie group allows for minor updates to be made based on Lie algebra parameters, rather than directly on the Lie group. This simplifies complex nonlinear multiplication operations into linear addition operations, transforming an optimization problem on a nonlinear manifold (the Lie group) into an optimization problem on its linear tangent space (the Lie algebra tangent space), i.e., a series of unconstrained optimization problems.

In some embodiments, the processor may determine multiple pairs of anatomical feature points based on the 2D ultrasound image and the target 3D model, and determine the second transformation model by minimizing a sum of second distances.

Each pair of the multiple pairs of anatomical feature points includes a contour point from the 2D ultrasound image and a grid point from the target 3D model matching the contour point. More descriptions regarding the contour points may be found elsewhere in the present disclosure (e.g., operation 230 in FIG. 2 and its related description).

The grid point refers to a vertex constituting a geometric shape of the target 3D model. The target 3D model is typically represented by a 3D grid that includes a plurality of vertices (i.e., grid points), which collectively define a surface of the target 3D model.

In some embodiments, a process for obtaining the pairs of anatomical feature points may include the following operations. The processor may segment the 2D ultrasound image to obtain a plurality of target regions and the identities of the plurality of target regions. The processor may determine a 2D tomographic image within the target 3D model that corresponds to the 2D ultrasound image. Because the target 3D model is pre-annotated with the anatomical identity of each anatomical region, the processor may identify corresponding regions within the 2D tomographic image that share the same anatomical identity as the target regions from the 2D ultrasound image.

For each contour point in the 2D ultrasound image, the processor may determine the target region to which the contour point belongs, and search for a grid point matching the contour point within an anatomical region of the 2D tomographic image that corresponds to the target region, in order to construct the pair of anatomical feature points. For example, the processor may determine a similarity between the contour point in the target region and each of grid points in the anatomical region of the 2D tomographic image corresponding to the target region. A grid point with a highest similarity to the contour point is determined as the grid point matching the contour point. A contour point and a grid point matching the contour point together constitute the pair of anatomical feature points. By finding a matching grid point for each contour point, the processor may obtain multiple pairs of anatomical feature points.

Each of the second distances is a distance between the contour point and a transformed grid point in a pair of anatomical feature points. The transformed grid point refers to the grid point after being transformed using an intermediate second transformation model generated during a process of minimizing the sum of the second distances. The transformed grid points may constitute an intermediate transformed 3D target model. Merely by way of example, the processor uses the intermediate second transformation model to transform the grid point, obtaining coordinates of the transformed grid point. A distance calculation is performed between the coordinates of the transformed grid point and the coordinates of the corresponding contour point to obtain the second distance for that pair of anatomical feature points. The processor may accumulate the second distances for the multiple pairs of anatomical feature points to obtain the sum of the second distances. The sum of the second distances may denote the similarity measure between the intermediate transformed 3D target model transformed by the intermediate second transformation model and the 2D ultrasound image.

In some embodiments, the processor may use a robust loss function to process each second distance to obtain processed second distances, and determine the second transformation model by minimizing the sum of the processed second distances.

The robust loss function refers to a function used to reduce anomalous noise in 2D ultrasound image. In some embodiments, the robust loss function may include an absolute value loss function, a Huber loss function, etc. The present disclosure imposes no limitation in this regard.

In some embodiments, the processor may determine the second transformation model in two modes: a fixed mode and a dynamic mode.

The fixed mode and the dynamic mode are described separately below.

In the fixed mode, there is only a single target 3D model for different motion phases. In this case, the processor may associate 2D ultrasound images from different motion phases with the target 3D model.

Accordingly, the processor may construct a first objective function as follows:

$$S^* = arg\, m\, in \sum_{p_i \in \Omega} \left\| \rho\left(Sp_i - q_j^k\right) \right\|_2 \qquad (2);$$

where $q_j^k$ is a j-th contour point segmented from a 2D ultrasound image acquired in a k-th scan, $p_i$ is a grid point matching $q_j^k$, $\Omega$ is a set of grid points of the target 3D model, and S is the intermediate second transformation model or an initial second transformation model used in each iteration. $\rho$ is the robust loss function.

The first objective function (2) is to determine the second transformed model to make the sum of the plurality of second distances minimum. By optimizing using the first objective function (2), the processor may determine the intermediate second transformation model S that minimizes the sum of the plurality of second distances as the final second transformation model S*.

In the dynamic mode, there are a plurality of 3D models for different motion phases. The processor may determine a 3D model whose motion phase matches that of the 2D ultrasound image based on the motion phase of the 2D ultrasound image and the motion phase of each 3D model as the target 3D model, and then associate the 2D ultrasound image with the target 3D model.

Accordingly, the processor may construct a second objective function as follows:

$$S^* = arg\, m\, in \sum_{p_i^m \in \Omega_m} \left\| \rho\left(Sp_i^m - q_j^k\right) \right\|_2 \qquad (3);$$

where $m$ is a target 3D model associated with the 2D ultrasound image obtained in the k-th scan, $p_i^m$ is a grid point in the m-th target 3D model that matches $q_j^k$, and $\Omega_m$ is a set of grid points of the m-th target 3D model.

The second objective function (3) is to determine the second transformed model to make the sum of the plurality of second distances minimum. By optimizing using the second objective function (3), the processor may determine the intermediate second transformation model S that minimizes the sum of the plurality of second distances as the final second transformation model S*.

The aforementioned first objective function (2) and second objective function (3) are equivalent during the solving process and may both be transformed into nonlinear least squares problems. Their nonlinear nature originates from special transformation groups, which here are subgroups of the general linear group, i.e., Lie groups. In constructing parameters for the second transformation model, Lie algebra parameters are used instead of the original global transformation matrix (i.e., the registration parameters of the second transformation model). The processor performs a linearization processing on the local Lie algebra parameters to obtain gradient information. Subsequently, an exponential mapping function is used to convert the gradient information back into the space (i.e., the global transformation space) of the special transformation group. An iterative solution manner is employed to gradually make the sum of the plurality of second distances approach the minimum value, and the final second transformation model S* is determined. During the iterative solution process, when updating the intermediate second transformation model generated in a previous iteration during each iteration, only a minor adjustment to the intermediate second transformation model is required (e.g., via a perturbation model, performing addition on the Lie algebra, which approximates multiplication on the Lie group) to update the intermediate second transformation model.

In some embodiments of the present disclosure, by using a robust loss function in the optimization process, the robustness of the transformation algorithm can be significantly improved. This method enables the system to have greater tolerance for noisy ultrasound images, improving the reliability and practicality of the second transformation model.

In some embodiments of the present disclosure, by using dense geometric feature point pairs such as contour points and grid points for transformation, the final second transformation model becomes geometrically more accurate, providing a more reliable foundation for subsequent clinical diagnosis and measurement.

In 640, the target 3D model may be transformed to the 2D ultrasound image based on the second transformation model.

In some embodiments, the processor may transform the target 3D model to align the 2D ultrasound image by applying the second transformation model to the target 3D model, thereby obtaining the transformed target 3D model. For example, the processor may traverse each grid point in the target 3D model and use the 3D coordinates of each grid point as input of the second transformation model. The processor may determine new coordinates for each grid point through the mathematical operations (e.g., scaling, rotation, and translation) defined by the second transformation model, thereby obtaining the transformed target 3D model.

Merely by way of example, after obtaining the second transformation model S*, the processor may transform the target 3D model to align the 2D ultrasound image using the second transformation model $S*$. In the fixed mode, the transformed target 3D model may be represented as $p_i' = S^* p_i$. In the dynamic mode, the transformed target 3D model may be represented as $p_i^{k'} = S^* p_i^k$.

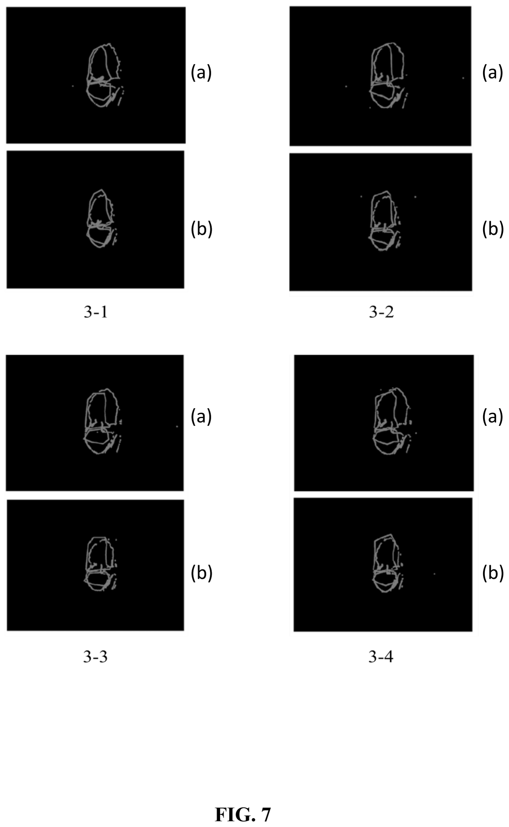

FIG. 7 is a schematic diagram of a comparison image according to some embodiments of the present disclosure.

Refer to FIG. 7. Red lines in FIG. 7 represents the cardiac chamber segmented from the 2D ultrasound image. 3-1 to 3-4 are four sets of comparison images. In each set of comparison images, image (a) shows an alignment of the 2D ultrasound image and a transformed target 3D model generated without using the second transformation model provided in the present disclosure, and the green portion (e.g., green lines or green points) of the image (a) shows the cross-sectional view of the target 3D model on a plane of the ultrasound image; image (b) shows an alignment of the 2D ultrasound image and a transformed target 3D model generated using the second transformation model in the present disclosure, and the green portion of the image (b) shows the cross-sectional view of the transformed target 3D model on the plane of the ultrasound image. From each set of comparison images in FIG. 7, it may be clearly seen that the cross-sectional view of the transformed target 3D model generated by using the second transformation model fits more closely with the cardiac chamber in the 2D ultrasound image , showing a significant effect especially in scale optimization. Actual testing found that the average target transformation error using the second transformation model decreased from 12.61 mm to 11.60 mm, indicating a significant improvement in transformation accuracy.

In some embodiments of the present disclosure, scaling, rotation, and/or translation of the target 3D model can be achieved according to the second transformation model, which can reduce errors because the target 3D model and the 2D ultrasound image are of different subjects, making the transformation result more accurate. In embodiments of the present disclosure, the morphology of the subject presented by the target 3D model to be transformed often differs to some extent from the morphology of the subject in the 2D ultrasound image. To reduce or even avoid this difference, the target 3D model can be transformed to align the ultrasound image according to the registration parameters, determining a transformed 3D model (e.g., the transformed target 3D model). The deformed 3D model is used to present the morphology of the subject in the medical image to be transformed. That is, the target 3D model can be transformed based on the 2D ultrasound image, so that the morphology of the subject presented by the transformed target 3D model is consistent with the morphology of the subject presented in the 2D ultrasound image.

It should be understood that if the ultrasound image and the target 3D model come from different patients, for example, the ultrasound image is from a child and the target 3D model is from an adult, then there is a significant scale difference between the ultrasound image and the target 3D model. Even if the ultrasound image and the target 3D model come from the same patient, differences in scale may easily occur due to different scanning times or a physiological state of the patient during scanning. In embodiments of the present disclosure, the registration parameters may include a scale parameter of the 3D model to be transformed. Subsequently, when transforming the target 3D to align the ultrasound image, in addition to rotation and translation, the size of the target 3D model can also be scaled, making the scale of the transformed target 3D model to be consistent with that of the ultrasound image.

In embodiments of the present disclosure, by obtaining the ultrasound and the target 3D model , and transforming the target 3D model to align the ultrasound image according to the registration parameters to determine the transformed target 3D model, the transformed target 3D model is used to present the morphology of the subject in the medical image. While transforming the target 3D model to align the 2D ultrasound image, because the used registration parameters incorporate scale considerations, the size can be scaled according to the morphology of the subject in the 2D ultrasound image during the transformation of the target 3D model , which can reduce errors caused by the target 3D model and the 2D ultrasound image coming from different patients, making the registration result more accurate.

In some embodiments, a transformation model for aligning the target 3D model and the 2D ultrasound image may be determined based on a free-form deformation manner (e.g., thin-plate splines, free-form deformation, and finite element methods). However, the free-form deformation manner is difficult to apply directly to transforming the target 3D model to align with the 2D ultrasound image. This is because the 2D ultrasound image only provides a single-slice view of the soft tissue, lacking information in the direction perpendicular to that slice, which leads to insufficient geometric constraints from the 2D ultrasound image. Consequently, when transforming the target 3D model to the 2D ultrasound image, an "ambiguity problem in the direction perpendicular to the 2D ultrasound data" is encountered. In other words, due to the lack of direct observation in the direction perpendicular to the 2D ultrasound image, free-form deformation manners often assume the space in this direction is empty, causing the target 3D model to be inappropriately "compressed" or "flattened". This limitation makes complex free-form deformation models prone to overfitting. Another explanation is that free-form deformation models have a large parameter space to finely express non-rigid transformation, while the 2D ultrasound image provides only enough information to establish a small-scale system of equations. This can easily lead to the number of equations being "less than" the parameter space, resulting in "underfitting". Here, "less than" can mean genuinely fewer equations, or it can refer to insufficient geometric constraints causing singularities in the transformation model calculation. To address these issues, the third transformation model may be constructed, achieving a more effective transformation of the target 3D model based on the 2D ultrasound image.

FIG. 8 is a flowchart of an exemplary process for determining a third transformation model according to some embodiments of the present disclosure. The process 800 includes the following operations.

In 810, the 2D ultrasound image of the subject may be obtained.

Operation 810 may be the same as or similar to operation 210. More descriptions regarding the 2D ultrasound image may be found in FIG. 2 and its related description

In 820, the target 3D model of the subject may be obtained.

Operation 820 may be the same as or similar to operation 220. More descriptions regarding the target 3D model may be found in FIG. 2 and its related description.

In 830, a third transformation model between the 2D ultrasound image and the target 3D model may be determined based on the 2D ultrasound image and the target 3D model.

The third transformation model may be used for transforming the the target 3D model to align the target 3D model and the 2D ultrasound image.

The third transformation model may be a non-rigid transformation model.

In some embodiments, the third transformation model may be used to stretch the target 3D model in at least two directions parallel to the 2D ultrasound image. For example, the third transformation model may be used to stretch the target 3D model in the two directions parallel to the 2D ultrasound image, but may restrict the stretch of the target 3D model in the direction perpendicular to the 2D ultrasound image. As another example, the third transformation model may be used to stretch the target 3D model in the two directions parallel to the 2D ultrasound image and in a direction perpendicular to the 2D ultrasound image.

In some embodiments, the third transformation model may be constructed based on a Lie group. For example, the second transformation model includes a plurality of registration parameters. At least one of the plurality of registration parameters belongs to the Lie group. In other words, at least one of the plurality of registration parameters of the second transformation model is an element in the Lie group.

In some embodiments, the third transformation model includes a plurality of registration parameters. The plurality of registration parameters including an affine matrix and a translation parameter (e.g., a translation vector). The affine matrix approximates a rotation matrix. As used herein, the affine matrix approximating a rotation matrix refers to that a plurality of rotation matrices decomposed from the affine matrix includes a rotation matrix that has a distance from the affine matrix less than a distance threshold. For example, the affine matrix may be decomposed, using a singular value decomposition (SVD) algorithm, to the plurality of rotation matrices, if a rotation matrix among the plurality of rotation matrices has a distance from the affine matrix less than a distance threshold, the affine matrix is considered to approximate that rotation matrix.

The affine matrix may be a matrix representing a linear transformation (e.g., rotation or scaling). Unlike the rotation matrix, which may only represent rigid motion, the affine matrix may simulate non-rigid, linear deformation. The translation vector is used to translate the target 3D model.

It should be understood that the affine matrix allows non-rigid deformation, but the processor may add a soft constraint during the solving process of the third transformation model to make the affine matrix approximate a rigid rotation matrix, thereby limiting the severity of the deformation based on the affine matrix.

In some embodiments, the third transformation model may be represented as the following formular (4):

$$B_k = \begin{bmatrix} A_k & t_k \\ 0_3^\mathsf{T} & 1 \end{bmatrix} \qquad (4);$$

where the affine matrix $A_k \in R^{3\times3}$, $t_k \in R^3$ is the translation vector, $B_k$ is in a $4\times4$ homogeneous form, and $0_3^\mathsf{T}$ represents a 3*3 zero matrix.

In some embodiments of the present disclosure, by using an affine matrix approximating a rotation matrix, flexible and controlled non-rigid transformation can be achieved to enable more accurate contour matching, while effectively reducing the probability of unreasonable geometric distortion.

In some embodiments of the present disclosure, by strictly transforming deformation in the direction perpendicular to the 2D ultrasound image, unreasonable "flattening" of the model can be fundamentally prevented, while retaining the model's ability to adaptively deform in the "in-plane" directions supported by 2D image information.

In some embodiments, the processor may determine multiple pairs of anatomical feature points based on the 2D ultrasound image and the target 3D model. Each pair of the multiple pairs of anatomical feature points includes the contour point from the 2D ultrasound image and the grid point from the target 3D model matching the contour point. The processor may determine the third transformation model by minimizing a sum of third distances and the soft constraint. Each of the third distances is a distance between the contour point and the grid point in each pair after the grid point is transformed using an intermediate third transformation model generated during minimizing the sum of third distances.

In some embodiments, a process for obtaining the pairs of anatomical feature points may include the following operations. The processor may segment the 2D ultrasound image to obtain a plurality of target regions and the identities of the plurality of target regions. The processor may determine a 2D tomographic image within the target 3D model that corresponds to the 2D ultrasound image. Because the target 3D model is pre-annotated with the anatomical identity of each anatomical region, the processor may identify corresponding regions within the 2D tomographic image that share the same anatomical identity as the target regions from the 2D ultrasound image.

For each contour point in the 2D ultrasound image, the processor may determine the target region to which the contour point belongs, and search for a grid point matching the contour point within an anatomical region of the 2D tomographic image that corresponds to the target region, in order to construct the pair of anatomical feature points. For example, the processor may determine a similarity between the contour point in the target region and each of grid points in the anatomical region of the 2D tomographic image corresponding to the target region. A grid point with a highest similarity to the contour point is determined as the grid point matching the contour point. A contour point and a grid point matching the contour point together constitute the pair of anatomical feature points. By finding a matching grid point for each contour point, the processor may obtain multiple pairs of anatomical feature points.

More descriptions of obtaining the multiple pairs of anatomical feature points may be found in FIG. 6 and its related description. More descriptions regarding the contour point may be found in FIG. 8 and its related description.

Merely by way of example, the processor may set an initial third transformation model, and then perform an iterative process to optimize the initial third transformation model based on an objective function (also referred to as a third objective function) to obtain the final third transformation model. The third optimization objective of the objective function may be minimizing the sum of third distances and the soft constraint. The independent variable of the third objective function may be registration parameters of the third transformation model. The third objective function may be constructed based on the sum of third distances and the soft constraint.

The processor may determine the third transformation model by minimizing the sum of third distances and the soft constraint term. The soft constraint term may be a product of a hyperparameter and the soft constraint on the affine matrix. The soft constraint is used to constrain the affine matrix to approximate the rotation matrix. If the affine matrix were a standard rotation matrix and lacked the soft constraint, the affine matrix would lose its non-rigid transformation characteristics and would stretch the target 3D model in the at least two direction perpendicular to the 2D ultrasound image, causing the target 3D model to be inappropriately stretched. After the processor adds the soft constraint to the affine matrix, the affine matrix may be made to approximate the rotation matrix, and the stretching of the target 3D model in the at least two direction perpendicular to the 2D ultrasound image may be constrained.

In some embodiments, the processor modifies each third distance using the robust loss function and uses the transformation model that minimizes the sum of the modified third distances and the soft constraint term as the third transformation model.

For example, the processor may construct the third objective function as following formular (5):

$$B_k{}^* = arg\,min \sum_{p_i \in \Omega} \left\| \rho(B_k p_i - q_j) \right\|_2 + \lambda \left\| Rot(A_k) \right\|_2 \qquad (5);$$

*where* $q_j$ is the j-th contour point segmented from the 2D ultrasound image, $p_i$ is the grid point matching $q_j$, $\Omega$ is the set of grid points $p_i$, $B_k$ is the intermediate third transformation model or the initial third transformation model, $\rho$ is the robust loss function, $\lambda$ is the hyperparameter, and $Rot(A_k)$ is the soft constraint term. In this case, the intermediate third transformation model $B_k$ has 12 degrees of freedom.

Before optimizing using the third objective function (5), an initial third transformation model may be determined (e.g., a unit matrix). During the optimizing using the third objective function (5) including multiple iterations, the initial third transformation model may be applied on the target 3D model to obtain a transformed target 3D model and a similarity between the transformed 3D model and the 2D ultrasound image may be determined. The initial third transformation model may be updated based on the similarity between the transformed 3D model and the 2D ultrasound image to generate an intermediate third transformation model and the intermediate third transformation model may be used in the next iteration. For example, the intermediate third transformation model may be designated as the initial third transformation model used in the next iteration. The processor may use the initial third transformation model or the intermediate third transformation model $B_k$ that minimizes the sum of the third distances and the soft constraint term as the third transformation model $B_k{}^*$.

In some embodiments, after the processor adds the soft constraint to the affine matrix, the affine matrix is orthogonal and has a determinant of 1.

In some embodiments, the soft constraint may be represented as: $Rot(A_k) = (c_1 \cdot c_2)^2 + (c_1 \cdot c_3)^2 + (c_2 \cdot c_3)^2 + (c_1 \cdot c_1 - 1)^2 + (c_2 \cdot c_2 - 1)^2 + (c_3 \cdot c_3 - 1)^2$, where $c_1$, $c_2$, and $c_3$ are the three column elements of the affine matrix $A_k$, respectively.

In some embodiments, the processor determines the third transformation model by minimizing the sum of third distances and the soft constraint term, indicating that using the third transformation model may align each pair of anatomical feature points as closely as possible, while using the soft constraint to limit the stretching of the target 3D model in the direction perpendicular to the 2D ultrasound image. Therefore, using the transformation model that minimizes the sum of the plurality of third distances and the soft constraint term as the third transformation model can make the third transformation model more accurate. Furthermore, in at least two directions parallel to the 2D ultrasound image, the processor may adaptively transform the target 3D model according to the 2D ultrasound image via the affine matrix $A_k$.

In some embodiments of the present disclosure, by introducing a soft constraint term into the optimization process for determining the third transformation model, flexible and controlled non-rigid transformation can be achieved. Utilizing the capability of affine transformation, the model is allowed to undergo necessary local deformation in the "in-plane" directions supported by the 2D ultrasound image information, enabling the model to match the contour details of the anatomical structure more accurately than a purely rigid transformation.

In some embodiments, the third transformation model is configured to stretch the target 3D model in at least two directions parallel to the 2D ultrasound image and restrict a stretch of the target 3D model in the direction perpendicular to the 2D ultrasound image.

It should be understood that using the third transformation model does not stretch the target 3D model in a direction perpendicular to the 2D ultrasound image. Meanwhile, the target 3D model may change freely in the two directions parallel to the 2D ultrasound image. Therefore, when the third transformation model is applied, the target 3D model may be stretched or compressed in directions parallel to the 2D ultrasound image to match the contour, but the size of the target 3D model is strictly kept unchanged in the direction perpendicular to the 2D ultrasound image.

In some embodiments, the third transformation model may be a non-rigid transformation model with a fixed scaling axis. The third transformation model may include the affine matrix. The affine matrix may be a product of a first rotation matrix, an axis-symmetric matrix, and a second rotation matrix. An element on a symmetry axis of the axis-symmetric matrix corresponding to a direction perpendicular to the 2D ultrasound image has a value of 1.

The processor may further determine multiple pairs of anatomical feature points based on the 2D ultrasound image and the target 3D model, and determine the third transformation model by minimizing the sum of third distances.

Merely by way of example, for the third transformation model, the processor may construct a subgroup $L_k$ of the third transformation model, such that $L_k$ has no scaling transformation in the direction perpendicular to the 2D ultrasound image, and may perform arbitrary stretching transformations in at least two directions parallel to the 2D ultrasound image. At this point, the processor may perform singular value decomposition (SVD) on the affine matrix $A_k$ according to the following formular (6):

$$A_k = U_k \Sigma_k V_k^T \qquad (6);$$

where $U_k$ and $V_k$ are both rotation matrices that are orthogonal and have a determinant of 1, $\Sigma_k$ is an axis-symmetric matrix, and the three values on the symmetry axis represent scaling amounts in three directions, respectively. The three directions include the aforementioned direction perpendicular to the 2D ultrasound image, and two mutually perpendicular directions in the plane of the 2D ultrasound image. The affine matrix $A_k$ may be understood as first rotating an arbitrary point $p$ using the rotation matrix $V_k^T$, then performing scaling transformations along the three directions according to the elements on the symmetry axis of the axis-symmetric matrix after rotation, and finally rotating using the rotation matrix $U_k$.

Based on the above description, the third transformation model may be expressed as the following formular (7) and formular (8):

$$L_k = \begin{bmatrix} M_k & t_k \\ 0_3^\top & 1 \end{bmatrix} \qquad (7);$$

$$M_k = R_l \Sigma' R_r R_0 \qquad (8);$$

where $R_0$ is a fixed second rotation matrix. The processor transforms a grid point $p_i$ of the target 3D model to a custom coordinate system. A Z-axis of the custom coordinate system is perpendicular to the plane of the 2D ultrasound image, i.e., parallel or coincident with the direction perpendicular to the 2D ultrasound image. An X-axis and a Y-axis directions of the custom coordinate system are in the plane of the 2D ultrasound image. $R_r$ is used to rotate the point $R_0 p_i$ in the plane of the 2D ultrasound image, having only one degree of freedom. A third element of a symmetry axis of $\Sigma'$ is fixed to 1. Other two elements of the symmetry axis constitute two degrees of freedom. The other two elements enabling the target 3D model to undergo adaptive transformations in two directions in the plane of the 2D ultrasound image according to the 2D ultrasound image. $R_l$ is a first rotation matrix with three degrees of freedom. $SO(3)$ referring to a special orthogonal group containing the rotation matrix R, which may be referred to as a 3D rotation group, i.e., the Lie group. Thus, $L_k$ is a subgroup of $B_k$, having 9 degrees of freedom. A scaling transformation of $L_k$ in the direction perpendicular to the 2D ultrasound image is fixed to 1, and scaling transformations in two directions in the plane of the 2D ultrasound image are unrestricted. A translation vector $t_k$ has 3 degrees of freedom.

In some embodiments, obtaining the third transformation model may include correcting each third distance using a robust loss function. A transformation model that minimizes a sum of the corrected third distances is determined as the third transformation model.

Merely by way of example, the processor may construct the third objective function as following formular (9):

$$L_k^* = arg\, min \sum_{p_i \in \Omega} \left\| \rho(L_k p_i - q_j) \right\|_2 \qquad (9);$$

where $q_j$ is a j-th contour point segmented from the 2D ultrasound image, $p_i$ is a grid point matching $q_j$, $\Omega$ is a set of grid points $p_i$, $L_k$ is an intermediate third transformation model or an initial third transformation model, $\rho$ is the robust loss function. In this case, $L_k$ has 12 degrees of freedom. The processor may determine an intermediate third transformation model $L_k$ that minimizes the sum of the plurality of third distances as a final third transformation model $L_k^*$ by performing optimization using the third objective function (9).

The aforementioned third objective functions (5) and (9) are equivalent during the solving process and may both be transformed into nonlinear least squares problems. The processor may use an iterative solution manner on formula (5) or formula (9) to gradually approach the minimum value and ultimately determine the registration parameters. During the iterative solution process, when updating the intermediate registration parameters generated in a previous iteration during each iteration, only a minor adjustment to the intermediate registration parameters is required (e.g., via a perturbation model, performing addition in the Lie algebra, which approximates multiplication on the Lie group) to update the intermediate registration parameters.

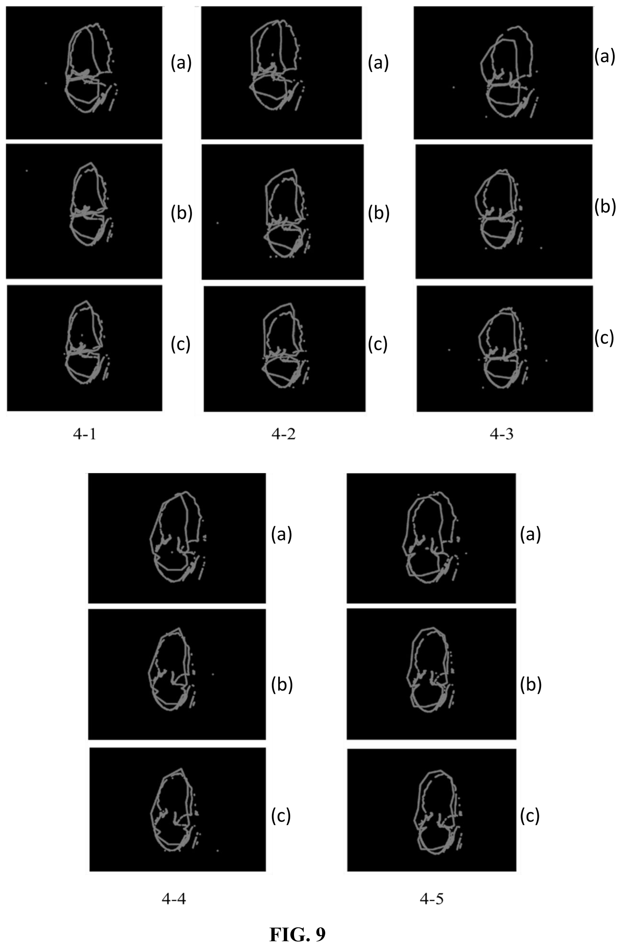

FIG. 9 is a schematic diagram of a comparison image according to some other embodiments of the present disclosure.

Refer to FIG. 9. Red lines in FIG. 9 represents the heart chamber segmented from the 2D ultrasound image. 4-1 to 4-5 represent five sets of comparison images. In each set of comparison images, image (a) shows an alignment of the 2D ultrasound image and a transformed target 3D model generated without using the third transformation model provided in the present disclosure, and a green portion (e.g., green lines or green points) of image (a) shows a cross-sectional view of the target 3D model on the plane of the 2D ultrasound image; image (b) shows an alignment of the 2D ultrasound image and a transformed target 3D model generated using a non-rigid transformation with a soft constraint, and a green portion of image (b) shows a cross-sectional view of the transformed target 3D model on the plane of the 2D ultrasound image; image (c) shows an alignment of the 2D ultrasound image and a transformed target 3D model generated using a non-rigid transformation with a fixed scaling axis, and a green portion of image (c) shows a cross-sectional view of the transformed target 3D model on the plane of the 2D ultrasound image. From each set of comparison images in FIG. 9, it may be clearly seen that the cross-sectional view of the transformed target 3D model generated by using the third transformation model fits more closely with the heart chamber in the 2D ultrasound image, showing a significant effect especially in scale optimization.

In some embodiments of the present disclosure, the non-rigid transformation scheme with the fixed scaling axis, compared to the non-rigid transformation scheme with the soft constraint, does not require setting hyperparameters and can be conveniently applied to transformation scenarios.

In 840, the target 3D model may be transformed to align the target 3D model with the 2D ultrasound image based on the third transformation model.

Similar to the manner in the aforementioned

FIG. 6, after obtaining the third transformation model, the processor may complete the transformation process by applying the third transformation model to the target 3D model, thereby transforming the target 3D model to the 2D ultrasound image to obtain the transformed target 3D model.

In some embodiments of the present disclosure, by adopting a third transformation model that allows deformation in at least two directions parallel to the 2D ultrasound image, an effective non-rigid transformation is achieved, enabling the transformed target 3D model to achieve higher geometric accuracy and ensuring that the transformed target 3D model can be highly consistent with the 2D ultrasound image.

In embodiments of the present disclosure, a morphology of the subject presented by the target 3D model and a morphology of the subject in the 2D ultrasound image often have certain differences. To reduce or even avoid such differences, the target 3D model may be transformed to align the 2D ultrasound image according to the third transformation model to determine a transformed target 3D model. The transformed target 3D model is used to present the morphology of the subject in the 2D ultrasound image. That is, the target 3D model may be transformed to align the 2D ultrasound image and constrained via the 2D ultrasound image, such that a morphology of the subject presented by the transformed target 3D model is consistent with a morphology of the subject presented in the 2D ultrasound image.

In some embodiments of the present disclosure, by acquiring the 2D ultrasound image and the target 3D model, and transforming the target 3D model to align the 2D ultrasound image according to a third transformation model between the 2D ultrasound image and the target 3D model to determine the transformed target 3D model. The transformed target 3D model is used to present the morphology of the subject in the 2D ultrasound image. While transforming the target 3D model to align the 2D ultrasound image, because the used third transformation model can limit scaling transformation in a direction perpendicular to the 2D ultrasound image during a process of transforming the target 3D model into the transformed target 3D model, it can reduce inappropriate compression of the target 3D model in the perpendicular direction due to a lack of information of the 2D ultrasound image in the perpendicular direction, making the transformation result more accurate.

FIG. 10 is a flowchart of an exemplary process for obtaining a transformed target 3D model according to some other embodiments of the present disclosure. The process 1000 includes the following operations.

In 1010, the 2D ultrasound image of the subject may be obtained.

Operation 1010 may be the same as or similar to operation 210. More descriptions regarding the 2D ultrasound image may be found in FIG. 2 and its related description.

In 1020, the target 3D model of the anatomical structure of the subject may be obtained.

Operation 1020 may be the same as or similar to operation 220. More descriptions regarding the target 3D model may be found in FIG. 2 and its related description.

In 1030, the first transformation operation and the second transformation operation may be performed on the target 3D model to obtain a transformed target 3D model.

The first transformation operation may be performed based on a transformation model (e.g., at least one of the first transformation model, the second transformation model, the third transformation model as described elsewhere in the present disclosure) between the target 3D model and the 2D ultrasound image.

The second transformation operation may be performed based on another transformation model (e.g., at least one of the first transformation model, the second transformation model, the third transformation model as described elsewhere in the present disclosure) between the target 3D model and the 2D ultrasound image. The transformation model used in the first transformation operation may be different from the transformation model used in the second transformation operation.

In some embodiments, the first transformation operation may include a global transformation operation; the second transformation operation may include a local transformation operation. Global transformation uses a simple model (such as translation, rotation, and scaling) to first bring the two images (e.g., the target 3D model and the 2D ultrasound image) into close overall alignment. This provides a starting point that is very close to the final target for the subsequent complex local optimization algorithm. Starting from this favorable position, the local transformation algorithm only needs to perform fine-tuning, thereby greatly avoiding the possibility of converging to an incorrect local optimum. The global transformation model is simple and computationally extremely fast. It first quickly resolves the most significant discrepancies, drastically reducing the solution space that the subsequent local registration needs to explore. As a result, the local transformation algorithm can achieve convergence with fewer iterations, which substantially saves computational time and resources overall.

**In** some embodiments, the first transformation operation may include a rigid transformation operation or an affine transformation operation; the second transformation operation may include a non-rigid transformation operation. Rigid transformations (translation, rotation) or affine transformation can effectively correct global, large-scale differences between images. Performing rigid transformation first provides a "good initial estimate" for the subsequent non-rigid transformation. On this roughly aligned foundation, the non-rigid transformation only needs to handle local, relatively small deformations. This simplifies the optimization problem significantly, leading to faster and more stable convergence. As the optimization process is more stable and the non-rigid transformation focuses solely on genuine local details, the final registration accuracy is typically significantly higher than that achieved by direct non-rigid transformation. This approach avoids registration failure caused by excessively large initial positional discrepancies.

In some embodiments, the first transformation operation may include a global transformation operation; the second transformation operation may include a non-rigid transformation operation.

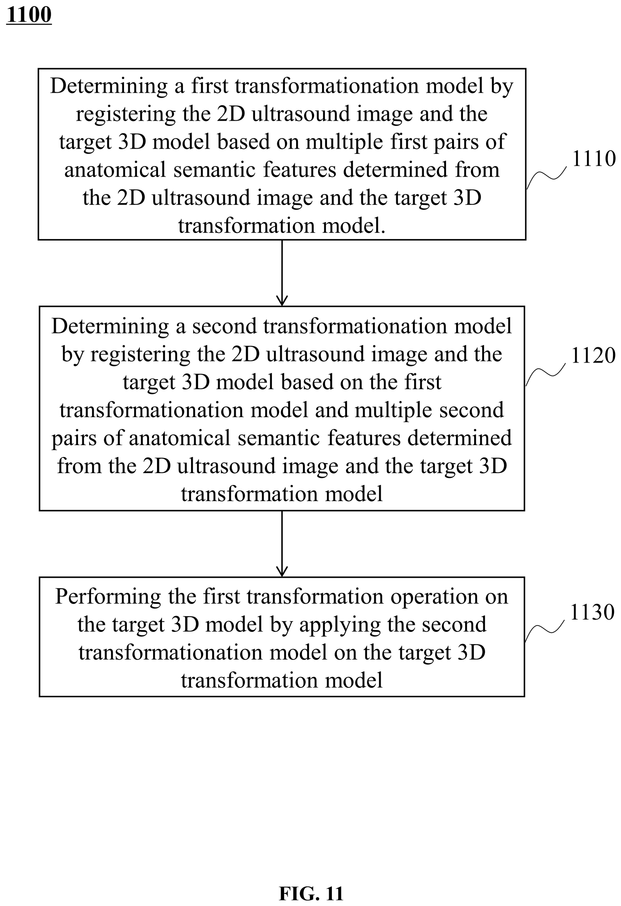

The first transformation operation may be performed according to process 1100 as shown in FIG. 11. FIG. 11 is a flowchart of an exemplary process for performing a first transformation operation according to some other embodiments of the present disclosure. The process 1100 includes the following operations.

In some embodiments, the processor performing the first transformation operation between the 2D ultrasound image and the target 3D model includes the following operations.

In 1110, the first transformation model may be determined by registering the 2D ultrasound image and the target 3D model based on multiple first pairs of anatomical semantic features determined from the 2D ultrasound image and the target 3D model.

In some embodiments, a process for obtaining the pairs of anatomical feature points may include the following operations. The processor may segment the 2D ultrasound image to obtain a plurality of target regions and the identities of the plurality of target regions. The processor may determine a 2D tomographic image within the target 3D model that corresponds to the 2D ultrasound image. Because the target 3D model is pre-annotated with the anatomical identity of each anatomical region, the processor may identify corresponding regions within the 2D tomographic image that share the same anatomical identity as the target regions from the 2D ultrasound image.

For each contour point in the 2D ultrasound image, the processor may determine the target region to which the contour point belongs, and search for a grid point matching the contour point within an anatomical region of the 2D tomographic image that corresponds to the target region, in order to construct the pair of anatomical feature points. For example, the processor may determine a similarity between the contour point in the target region and each of grid points in the anatomical region of the 2D tomographic image corresponding to the target region. A grid point with a highest similarity to the contour point is determined as the grid point matching the contour point. A contour point and a grid point matching the contour point together constitute the pair of anatomical feature points. By finding a matching grid point for each contour point, the processor may obtain multiple pairs of anatomical feature points.

More descriptions of obtaining the multiple pairs of anatomical feature points may be found in FIG. 6 and its related description. More descriptions regarding the contour point may be found in FIG. 8 and its related description.

In some embodiments, the processor may segment the 2D ultrasound image to determine one or more first regions of the subject. The processor obtains one or more second regions from the target 3D model. Each of the one or more first regions and one of the one or more second regions corresponds to a same portion of the subject. The processor may determine the multiple pairs of anatomical semantic features based on the one or more first regions and the one or more second regions.

The first region may refer to a region determined in the 2D ultrasound image through a segmentation operation. The second region may refer to a region determined from a 2D tomographic image in the target 3D model that matches the 2D ultrasound image. The 2D ultrasound image and the 2D tomographic image represent the same slice of the subject.

In some embodiments, the processor may segment the 2D ultrasound image according to a segmentation model to obtain the one or more first regions.

The one or more second regions in the target 3D model may be pre-marked or annotated. The anatomical semantic features of each of the one or more second regions may be stored in a storage device.

For more content regarding the segmentation model, refer to FIG. 2 and its related descriptions.

In some embodiments, each first pair of the anatomical semantic features may include a first anatomical semantic feature of a first region in the 2D ultrasound image and a second anatomical semantic feature of a second region in the 2D tomographic image in target 3D model. For example, the first anatomical semantic feature of a first region in the 2D ultrasound image may include a centroid of the first region and the first anatomical semantic feature of the second region in the 2D tomographic image in target 3D model may include a centroid of the second region, etc. For each first region, the processor may calculate a centroid of the first region, and calculate a centroid of a second region corresponding to the same portion of the subject as the first region, and form a pair of anatomical semantic features from the centroid of the first region and the centroid of the second region. The centroid of the second region may be determined according to point cloud information of the target 3D model.

Merely by way of example, when a target tissue of the subject is the heart, each chamber may correspond to a first region in the 2D ultrasound image and a second region in the target 3D model, and the chambers include a Left Ventricle (LV), a Left Atrium (LA), a Right Ventricle (RV), and a Right Atrium (RA). A centroid of a first region corresponding to each chamber and a centroid of a corresponding second region may form a pair of anatomical semantic features corresponding to the chamber.

Merely by way of example, when a target tissue of the subject is the liver, each lobe may correspond to a first region in the 2D ultrasound image and a second region in the target 3D model, and the lobes include a caudate lobe, a left lateral lobe, a left medial lobe, a right anterior lobe, and a right posterior lobe. A centroid of a first region corresponding to each lobe and a centroid of a corresponding second region may form a pair of anatomical semantic features corresponding to the lobe.

In some embodiments of the present disclosure, by first performing anatomical segmentation to determine corresponding anatomical regions, and then determining the multiple pairs of anatomical semantic features based on these regions, the process may not directly rely on raw image grayscale values that may contain noise and artifacts, thereby improving accuracy of the multiple pairs of anatomical semantic features.

In some embodiments, the processor may utilize positions of the multiple pairs of anatomical semantic features to determine the first transformation model according to the following formula (10):

$$min_{R^k,t^k} \sum_j \left|\left|(R^k\overline{p_j} + t^k - \overline{q_j})\right|\right|^2 \qquad (10);$$

where $\overline{p_j}$ and $\overline{q_j}$ are anatomical semantic features of the 2D ultrasound image and the target 3D model, respectively, $R^k$ is a rotation matrix, and $t^k$ is a translation matrix. It should be noted that three or more first pairs of anatomical semantic features may be used during the eigenvalue decomposition process. The rotation matrix, and the translation matrix are registration parameters of the first transformation model.

The above formula (10) may as also be referred to as a first objective function to minimize a sum of differences corresponding to the multiple pairs of anatomical semantic features. A difference (i.e., the first distance) corresponding to each pair of anatomical semantic features is obtained by transforming a position of a anatomical semantic feature in the target 3D model to a transformed position in the 2D ultrasound image using the rotation matrix and the translation matrix, and calculating the first distance between the transformed position and the position of a corresponding anatomical semantic feature in the 2D ultrasound image. The processor may determine the rotation matrix and the translation matrix that minimize the sum of the first distances corresponding to the multiple pairs of anatomical semantic features as the first transformation model.

In 1120, a second transformation model may be determined by registering the 2D ultrasound image and the target 3D model based on the first transformation model and multiple second pairs of anatomical semantic features determined from the 2D ultrasound image and the target 3D model.

The anatomical features may include contour information of the target tissue. The contour information includes positions of contour points describing a contour of the target tissue. For description of the contour points of the 2D ultrasound image, refer to operation 230 and related descriptions. The processor may determine, based on the grid points of the target 3D model, the grid points in the target 3D model that correspond to the contour points of the 2D ultrasound image, and use each pair of a contour point and a grid point as a second pair of anatomical semantic features.

Since the multiple first pairs of anatomical semantic features are limited, accuracy of the first transformation model is relatively poor. The present disclosure may use the first transformation model as an input, and perform a second registration between the 2D ultrasound image and the target 3D model in combination with the multiple second pairs of anatomical semantic features, to determine the second transformation model.

In some embodiments, the processor may determine the second transformation model by performing registration between the 2D ultrasound model and the target 3D model using an iterative closest point algorithm based on the first transformation model and the multiple second pairs of anatomical semantic features. The processor may use the first transformation model as an initial second transformation model.

A process of the iterative closest point algorithm is as follows:

S1: the first transformation model may be used as the initial second transformation model.
S2: A 2D tomographic image corresponding to the 2D ultrasound image may be determined from the target 3D model. For each contour point of the 2D ultrasound image, a grid point in the corresponding 2D tomographic image that matches the contour point may be identified. The contour point and the identified grid point constitute a second pair of anatomical semantic features. The distance herein may include a Euclidean distance.

S3: a transformation model (including a rotation matrix R and a translation vector t) may be estimated using the second pairs of anatomical semantic features by minimizing the sum of second distances each of which is associated with one of the second pairs of anatomical semantic features (e.g., using a least squares manner). Specifically, the second transformation model may be determined cording to the second objective function as followings:

$$min_{R^k,t^k} \sum_j \left\| R^k p_j + t^k - q_j \right\|^2 R^k\| \qquad (11);$$

where $q_j$ is a contour point of the 2D ultrasound image, $p_j$ is a grid point in the corresponding 2D tomographic image from the target 3D model that matches $q_j$. Similar to formula (10), formula (11) is used to determine the second transformation model by minimizing the sum of second distances corresponding to the multiple second pairs of anatomical semantic features using an iterative process. The first transformation model may be used as an initial second transformation model used in the first iteration of the iterative process. The second distance corresponding to each second pair of anatomical semantic features is obtained by transforming a position of a grid point in the target 3D model using the initial second transformation model (including rotation matrix and the translation vector) to a transformed position in the 2D ultrasound image, and calculating the second distance between the transformed position and the position of the contour point of the 2D ultrasound image. The processor may determine the rotation matrix and the translation vector based on the sum of the differences corresponding to the multiple second pairs of anatomical semantic features as the an intermediate second transformation model. The intermediate second transformation model may be used as the initial second transformation model used in the next iteration.

S4: the intermediate second transformation model may be used as the initial transformation model again and execute operations S2 to S4 until a preset count of iterations is reached, or an increment of the sum of the second distances corresponding to the multiple second pairs of anatomical semantic features is less than an increment threshold. The intermediate second transformation model obtained in the last iteration is determined as the second transformation model.

In some embodiments, the second transformation model may further include a plurality of registration parameters. The plurality of registration parameters include a scale parameter, a rotation matrix, and a translation vector. The scale parameter is used to adjust the size of the target 3D model. For example, the second transformation model may be similar to the second transformation model in FIG. 6.

In some embodiments, the processor may apply the second transformation model to the target 3D model to complete the first transformation operation.

In some embodiments of the present disclosure, by performing two rigid transformations, full alignment between the 2D ultrasound image and the target 3D model can be achieved, improving accuracy of the transformation.

In 1130, the first transformation operation may be performed on the target 3D model by applying the second transformation model on the target 3D model

In some embodiments, the second transformation operation may be a non-rigid transformation. The processor determines the third transformation model by registering the 2D ultrasound image and the target 3D model. The third transformation model includes a non-rigid transformation model.

In some embodiments, the processor may perform the second transformation operation on the 2D ultrasound image and the target 3D model, which may be implemented using dynamic modeling or simple modeling.

Simple modeling requires fewer parameters to be solved compared to dynamic modeling, which helps improve real-time performance. For example, simple modeling may include: determining the third transformation model of the 2D ultrasound image and the target 3D model based on the multiple third pairs of anatomical semantic features.

Merely by way of example, a formula for solving the third transformation model is expressed as:

$$min_{A^k,t^{k\prime}} \sum_j \left\| A^k(R^k p_j + t^k) + t^{k\prime} - q_j \right\|^2 [] \qquad (12);$$

the third transformation model includes an affine matrix $A^k \in R^{3\times3}$ and a translation vector $t^{k'} \in R^3$, and $q_j \in R^3$ is a contour point of the 2D ultrasound image. $p_j$ is a grid point in the corresponding 2D tomographic image from the target 3D model that is closest to $q_j$. The affine registration parameter $A^k$ allows addition of a soft constraint to the rotation matrix.

The above formula (12) as also be referred to as a function to minimize a sum of differences corresponding to multiple pairs of anatomical feature points. A difference (i.e., the third distance) corresponding to each pair of anatomical feature points is obtained by transforming a position of the grid point of the target 3D model to a transformed position in the 2D ultrasound image using the third transformation model, and then calculating a difference (i.e., the third distance) between the transformed position and the corresponding actual position of the contour point in the 2D ultrasound image. The processor uses the third transformation model that minimizes the sum of the differences (i.e., the third distance) corresponding to the multiple pairs of anatomical feature points as a final third transformation model.

In some embodiments, the third transformation model is configured to stretch the target 3D model in at least two directions parallel to the 2D ultrasound image and restrict a stretch of the target 3D model in a direction perpendicular to the 2D ultrasound image. The third transformation model includes a plurality of registration parameters. The plurality of registration parameters include an affine matrix and a translation vector. The affine matrix approximates a rotation matrix.

For a description of the third transformation model, refer to FIG. 8 and its related description.

Some embodiments of the present disclosure add a non-rigid transformation on the basis of a rigid transformation, allowing a point cloud to deform during the transformation process. By performing rigid and non-rigid transformations on the 2D ultrasound image and the target 3D model, point clouds on the transformed target 3D model can align in pose with matching point clouds on the 2D ultrasound image, thereby enabling the transformed target 3D model to reflect a real-time state of the subject.

In embodiments of the present disclosure, a morphology of the subject presented by the target 3D model often differs from a real-time morphology of the subject. To reduce this difference, the 2D ultrasound image and the target 3D model can be registered to determine a transformed target 3D model. The transformed target 3D model is used to present the morphology of the subject in the 2D ultrasound image. That is, the target 3D model can be transformed using the 2D ultrasound image, so that the morphology of the subject presented by the transformed target 3D model is consistent with the morphology of the subject presented in the 2D ultrasound image, thereby enabling the transformed target 3D model to reflect the real-time state of the subject.

In embodiments of the present disclosure, registering the 2D ultrasound image and the target 3D model can include rigid transformation and non-rigid transformation. rigid transformation treats the subject as a non-deformable object, obtaining rigid registration parameters between the 2D ultrasound image and the target 3D model, so that matching point clouds between the 2D ultrasound image and the target 3D model coincide in position and attitude as much as possible. The rigid registration parameters may include a rotation matrix and a translation matrix. In practical applications, since the subject of the 2D ultrasound image is usually an organ, tissue, or other object that deforms in real time, the present disclosure adds non-rigid transformation on the basis of rigid transformation, allowing the point cloud to deform during the registration process. By performing rigid transformation and non-rigid transformation on the 2D ultrasound image and the target 3D model, a set of registration parameters can be obtained. This set of registration parameters can register the target 3D model to the 2D ultrasound image, resulting in a transformed target 3D model, so that point clouds on the transformed target 3D model can align in pose with matching point clouds on the 2D ultrasound image, thereby enabling the transformed target 3D model to reflect the real-time state of the subject.

In embodiments of the present disclosure, by obtaining a 2D ultrasound image acquired by scanning the subject and a target 3D model of the subject, performing rigid transformation and non-rigid transformation on the 2D ultrasound image and the target 3D model to determine a transformed target 3D model, the transformed target 3D model can present the morphology of the subject in the 2D ultrasound image. This method associates the target 3D model with the 2D ultrasound image. Through registration, the target 3D model can conform to the organ or tissue morphology presented by the 2D ultrasound image, providing more accurate anatomical structure information, which aids in assisting surgeons in screening or surgical navigation. Furthermore, this method does not require fusing 2D images from different angles into a 3D view. Using a single 2D ultrasound image, a preoperatively constructed target 3D model can be registered, which can reduce the time required for scanning ultrasound images and improve real-time performance.

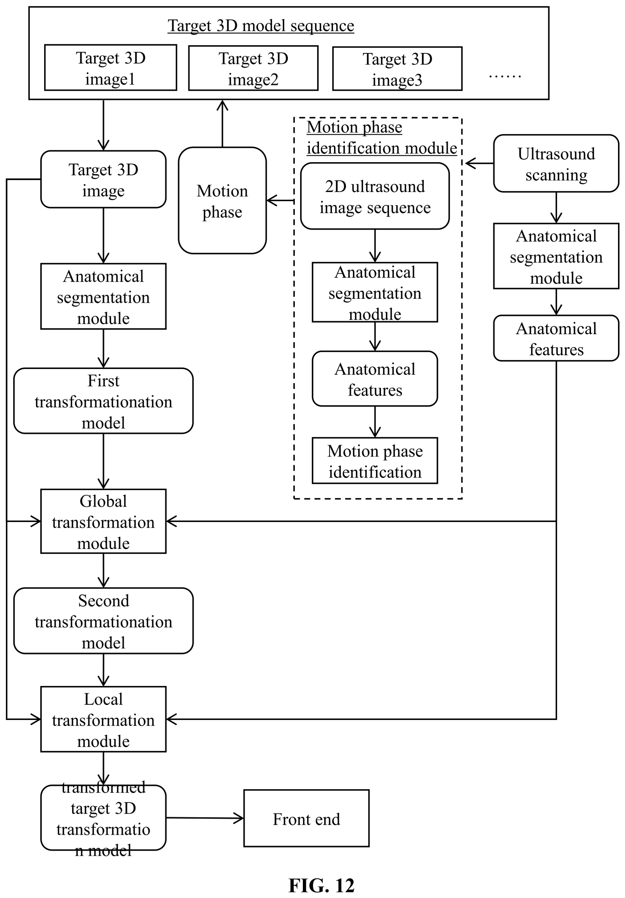

FIG. 12 is a schematic diagram illustrating an architecture of a system for generating a 3D ultrasound image based on a 2D ultrasound image according to some other embodiments of the present disclosure.

In some embodiments, as shown in FIG. 12, the system for generating a 3D ultrasound image based on a 2D ultrasound image may include: a motion phase identification module, an anatomical segmentation module, an anatomical transformation module, a global transformation module, and a local transformation module.

For a 2D ultrasound image sequence obtained from intraoperative ultrasound scanning, the anatomical segmentation module can obtain anatomical features through segmentation or other manners. In the motion phase identification module, historical ultrasound images may be segmented by the anatomical segmentation module to obtain anatomical semantic features for analyzing a correspondence between a morphological index and time. The correspondence may be used to identify the motion phase of the 2D ultrasound image. The motion phase may be used to select a target 3D model from a target 3D model sequence. For the target 3D model, the anatomical transformation module may perform a rigid transformation using the anatomical features to obtain a first transformation model. The global transformation module may perform a rigid transformation using the first transformation model and the anatomical features to obtain a second transformation model. The local transformation module may perform a non-rigid transformation using the second transformation model and the anatomical features to determine the transformed target 3D model. The transformed target 3D model may be output to a front-end display for display or surgical navigation.

FIG. 13 is a flowchart of an exemplary process for determining a motion phase of a 2D ultrasound image according to some embodiments of the present disclosure. The process 1300 includes the following operations.

In some embodiments, a process for the processor to determine the motion phase of the 2D ultrasound image includes the following operation.

In 1310, a historical ultrasound image sequence including a plurality of historical ultrasound images may be obtained.

The historical ultrasound image may be a 2D ultrasound image acquired at a historical time. The plurality of historical ultrasound images arranged in time sequence form the historical ultrasound image sequence.

For example, the historical ultrasound images may be several frames of ultrasound images preceding a current 2D ultrasound image. Merely by way of example, the processor may use a last frame of an ultrasound image sequence obtained by continuously scanning the subject as the 2D ultrasound image, and form the historical ultrasound image sequence from other frames of the ultrasound image sequence. As another example, the historical ultrasound images may be historical ultrasound images of other subjects.

The historical time may be any time point within a motion cycle of the subject. The historical time may correspond to different stages in the motion cycle (i.e., different motion phases).

In 1320, a correspondence relationship between a morphological index presented in the historical ultrasound image and time may be determined based on the historical ultrasound image.

The morphological index may reflect a morphology of the subject in the ultrasound image. The morphological index may include an area, a distance between a center of gravity and a contour, other specific morphological indices, etc., of a region in the ultrasound image. In some embodiments, the processor may obtain the morphological index of the ultrasound image through anatomical segmentation. The anatomical segmentation may be implemented using a deep learning network or other existing image segmentation algorithms, which is not limited in the present disclosure. For example, each historical ultrasound image may be segmented based on an image segmentation algorithm to determine different segmentation regions in the historical ultrasound image, and the morphological index of the segmentation regions may be further determined.

In some embodiments, the processor may determine the morphological index presented in each historical ultrasound image and determine the correspondence relationship between the morphological index and time based on the morphological index in each historical ultrasound image. The correspondence relationship between the morphological index and time is also a correspondence relationship between the morphological index and the motion phase.

In some embodiments, the processor may obtain the correspondence relationship between the morphological index and time based on the morphological index presented in each historical ultrasound image and the historical time corresponding to each historical ultrasound image (i.e., the motion phase within the motion cycle), e.g., a sampling time or a frame number.

In 1330, a motion phase of the 2D ultrasound image may be determined based on the morphological index determined from the 2D ultrasound image and the correspondence relationship between the morphological index and time.

In some embodiments, the processor queries the correspondence relationship between the morphological index and time based on a time when the current 2D ultrasound image is acquired, thereby determining the motion phase of the 2D ultrasound image.

In some embodiments, the processor may receive the motion phase of the 2D ultrasound image input by the operator, or obtain the motion phase by querying a label of the 2D ultrasound image, which is not limited in the present disclosure.

In some embodiments of the present disclosure, the correspondence relationship between the morphological index and time can be determined more accurately through historical ultrasound images, thereby quickly and conveniently determining the motion phase of the 2D ultrasound image.

The motion phase corresponding to each 3D model in the target 3D model sequence is preset. For a 2D ultrasound image of a single motion phase, the processor may filter, from the target 3D model sequence, a 3D model whose motion phase is the same as or closest to the motion phase of the 2D ultrasound image as the target 3D model.

In some embodiments of the present disclosure, different motion phases are respectively associated with one target 3D model. By selecting a target 3D model matching the motion phase of the 2D ultrasound image based on the motion phase of the 2D ultrasound image, it can be ensured that the target 3D model and the 2D ultrasound image are consistent in motion phase. Since the motion phase is correlated with the morphology of the subject, selecting a target 3D model with the same or closest motion phase can reduce errors caused by motion phase differences in subsequent transformation and determination of the transformed target 3D model.

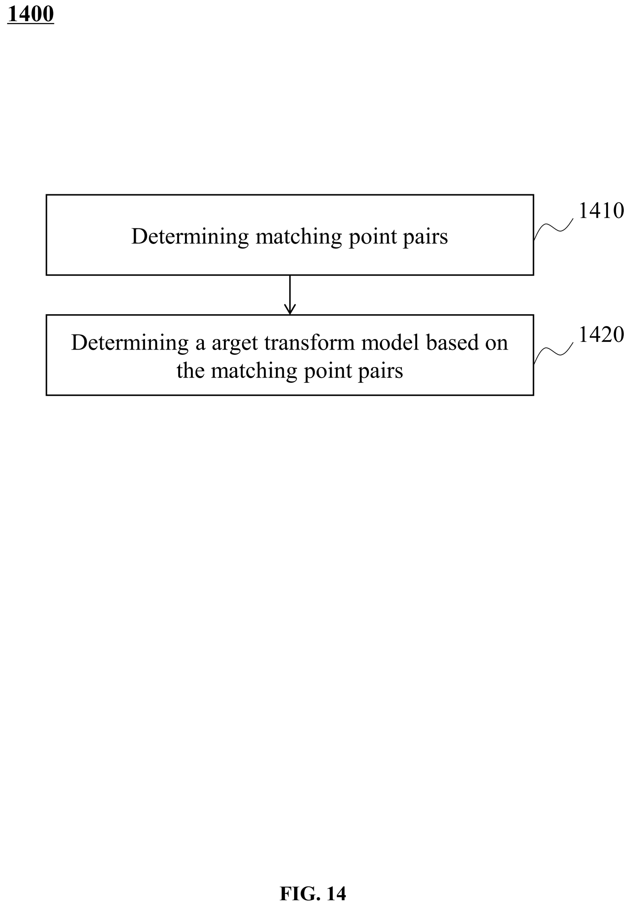

FIG. 14 is a flowchart of an exemplary process for determining a target transformation model according to some embodiments of the present disclosure. The first transformation model, the second transformation model, and the third transformation model may be determined according to process 1400 as shown in FIG. 14.

In 1410, matching point pairs (e.g., the first pair of anatomical semantic features, the second pair of anatomical semantic features, or the third pair of anatomical semantic features as described elsewhere in the present disclosure) are determined.

The matching point pair may include a first point in the 2D ultrasound image and a second point in the target 3D model. The first point and the second point in the same matching point pair may correspond to the same portion of the subject.

In some embodiments, the matching point pairs may be determined based onanatomical semantic features. For example, a matching point pair may be an anatomical semantic feature of a specific region in the 2D ultrasound image and an anatomical semantic feature of the same region in the target 3D model. As another example, a matching point pair may be a contour point of the 2D ultrasound image and a grid point at the same position in a corresponding 2D tomographic image from the target 3D model. More descriptions regarding the determination of a 2D tomographic image from the target 3D model corresponding to the 2D ultrasound image may be found in FIG. 2 and related descriptions thereof. As yet another example, a matching point pair may be a center of gravity of a specific region in the 2D ultrasound image and a center of gravity of the same region in the corresponding 2D tomographic image from the target 3D model.

In 1420, a target transformation model is determined based on the matching point pairs.

The target transformation model may be one of the first transformation model, the second transformation model, or the third transformation model.

In some embodiments, when the target transformation model is the second transformation model, a matching point pair may be a contour point of the 2D ultrasound image and a grid point at the same position in the corresponding 2D tomographic image from the target 3D model.

In some embodiments, when the target transformation model is the third transformation model, a matching point pair may be an anatomical semantic feature of a specific region in the 2D ultrasound image and an anatomical semantic feature of the same region in the target 3D model.

In some embodiments, when the target transformation model is the first transformation model, a matching point pair may be a center of gravity of a specific region in the 2D ultrasound image and a center of gravity of the same region in the target 3D model.

In some embodiments, the target transformation model may be determined using a trained machine learning model. For example, the matching point pairs may be inputted into the trained machine learning model and the target transformation model may be outputted by the trained machine learning model.

In some embodiments, the target transformation model may be determined using an optimization algorithm according to process 1400 as show in FIG. 14.

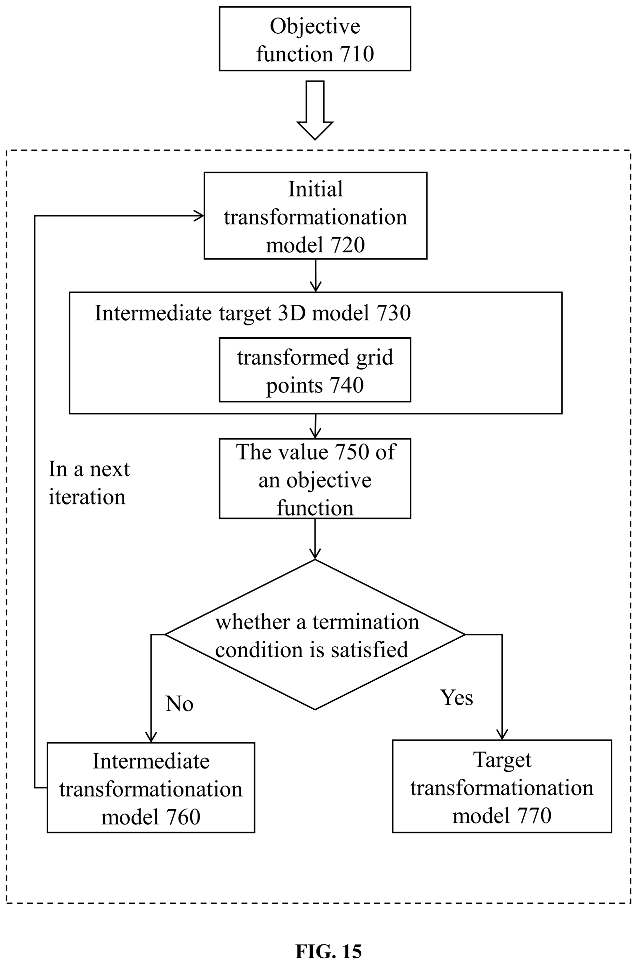

FIG. 15 is a schematic diagram of an exemplary process for determining a target transformation model according to some embodiments of the present disclosure.

In some embodiments, as shown in FIG. 15, the processor may construct an objective function 710 for minimizing a sum of target distances (e.g., one of the first distance, the second distance, or the third distance), and perform an iterative process based on the objective function 710.

In some embodiments, the iterative process includes a plurality of iterations, and each iteration includes: obtaining an initial transformation model 720. The target 3D model is transformed to the 2D ultrasound image based on the initial transformation model 720 to obtain an intermediate target 3D model 730. The intermediate target 3D model includes transformed grid points 740. A value 750 of the objective function is determined, and whether the value 750 of the objective function satisfies a termination condition is determined. If the value 750 of the objective function does not satisfy the termination condition, an initial transformation model 720 is updated to generate an intermediate transformation model 760, and the intermediate transformation model 760 is designated as the initial transformation model used in a next iteration. If the value 750 of the objective function satisfies the termination condition, the initial transformation model 720 is designated as a target transformation model 770 in a current iteration. The target transformation model may be one of a first transformation model, a second transformation model, or a third transformation model.

The present disclosure further provides a method for generating a 3D ultrasound image based on a 2D ultrasound image, applied to an ultrasound scanning system. Operations of the method include:

S1: A 2D cardiac image of the subject may be obtained.

S2: whether the 2D cardiac image is a predefined standard slice may be determined.

S3: In response to determining that the 2D cardiac image is a predefined standard slice, determine an initial slice from a plurality of predefined standard slices included in a generic 3D cardiac model based on the 2D cardiac image. The anatomical semantic feature of the initial slice is consistent with an anatomical semantic feature of the 2D cardiac image.

S4: In response to determining that the 2D cardiac image is not a predefined standard slice, transform the 2D cardiac image and the generic 3D cardiac model to determine an initial slice.

S5: An initial 3D image of the subject may be determined based on the initial slice and the generic 3D model.

S6: A measurement size of a target region in the 2D cardiac image may be determined based on the 2D cardiac image.

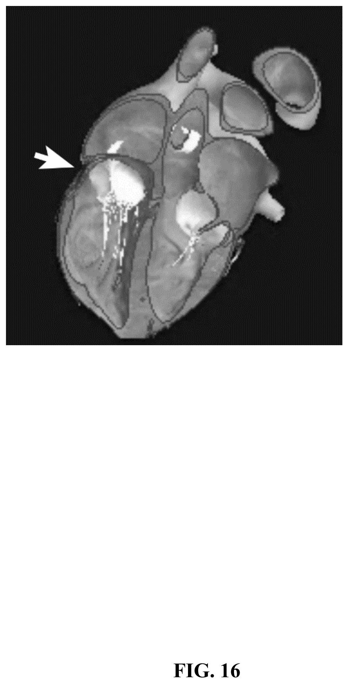

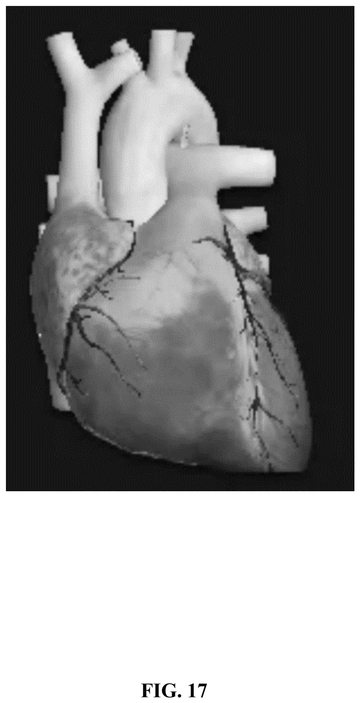

S7: A size of a corresponding region in the initial 3D image and/or the generic 3D cardiac model may be updated based on the measurement size of the target region to obtain the target 3D image and/or the target 3D model. For example, FIG. 16 is a schematic diagram of a target 3D image according to some embodiments of the present disclosure. FIG. 17 is a schematic diagram of a target 3D model according to some embodiments of the present disclosure.

S8: In response to determining that the 2D cardiac image is a predefined standard slice, determine second pose information of the ultrasound probe in the target 3D image and/or the generic 3D cardiac model from standard poses corresponding to the plurality of predefined standard slices based on the 2D cardiac image.

S9: In response to determining that the 2D cardiac image is not a predefined standard slice, transform the 2D cardiac image and the target 3D image and/or the generic 3D cardiac model to determine the second position information.

S10: A 2D deformation of the target region may be determined based on measurement sizes of the target region in a plurality of obtained 2D cardiac images. The plurality of 2D cardiac images are images of a same position of the subject.

S11: The 2D deformation may be mapped to at least one of the target 3D image, the generic 3D cardiac model, and the target 3D model.

It should be understood that, although operations in flowcharts related to the above-mentioned embodiments are displayed sequentially as indicated by arrows, these operations are not necessarily performed sequentially in the order indicated by the arrows. Unless explicitly stated in the present disclosure, there is no strict order for performing these operations, and the operations may be performed in other orders. Moreover, at least a portion of the operations in the flowcharts related to the above-mentioned embodiments may include a plurality of operations or a plurality of stages. These operations or stages are not necessarily performed at a same time, but may be performed at different times. An execution order of these operations or stages is not necessarily sequential, but may be performed alternately with other operations or at least a portion of operations or stages of other operations.

Based on the same inventive concept, embodiments of the present disclosure further provide an device for generating a 3D ultrasound image based on a 2D ultrasound image for implementing the above-mentioned method for generating a 3D ultrasound image based on a 2D ultrasound image. A solution provided by the device for solving a problem is similar to the solution described in the above-mentioned method. Therefore, specific limitations in one or more embodiments of the device for generating the 3D ultrasound image based on the 2D ultrasound image provided below may refer to the limitations for the method for generating the 3D ultrasound image based on the 2D ultrasound image described above, which are not repeated herein.

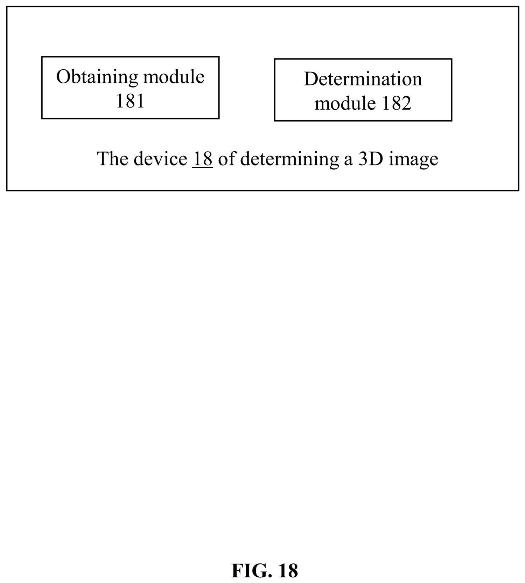

FIG. 18 is a schematic diagram of an device for generating a 3D ultrasound image based on a 2D ultrasound image according to some embodiments of the present disclosure.

In one embodiment, as shown in FIG. 18, an device 18 for generating the 3D ultrasound image based on the 2D ultrasound image includes: an obtaining module 181 and a determination module 182.

The obtaining module 181 is configured to obtain a 2D ultrasound image of the subject and a target 3D model of the anatomical structure of the subject.

The determination module 182 is configured to determinethe transformed target 3D model by transforming the target 3D model to align the target 3D model with the 2D ultrasound image, and generate the target 3D image of the subject based on the transformed target 3D model and the 2D ultrasound image.

In one embodiment, the present disclosure provides a non-transitory computer-readable storage medium storing a computer program. When the computer program is executed by a processor, the following operations are implemented:

obtaining a 2D ultrasound image of a subject;
obtaining a target 3D model of an anatomical structure of the subject;
obtaining a transformed target 3D model by transforming the target 3D model to align the target 3D model with the 2D ultrasound image; and
generating a target 3D image of the subject based on the transformed target 3D model and the 2D ultrasound image.

Those of ordinary skill in the art may understand that all or a portion of processes for implementing the methods in the above-mentioned embodiments may be completed by a computer program instructing related hardware. The computer program may be stored in a non-volatile computer-readable storage medium. When the computer program is executed, processes of the above-mentioned method embodiments may be included. Any reference to a memory, a database, or another medium in the embodiments provided in the present disclosure may include at least one of a non-volatile memory and a volatile memory. The non-volatile memory may include a read-only memory (ROM), a magnetic tape, a floppy disk, a flash memory, an optical memory, a high-density embedded non-volatile memory, a resistive random-access memory (ReRAM), a magnetoresistive random-access memory (MRAM), a ferroelectric random-access memory (FRAM), a phase change memory (PCM), a graphene memory, etc. The volatile memory may include a random access memory (RAM) or an external cache memory, etc. By way of illustration and not limitation, the RAM may be in various forms, such as a static random access memory (SRAM) or a dynamic random access memory (DRAM), etc. A database involved in the embodiments provided in the present disclosure may include at least one of a relational database and a non-relational database. The non-relational database may include a blockchain-based distributed database, etc., which is not limited thereto. A processor involved in the embodiments provided in the present disclosure may be a general-purpose processor, a central processing unit, a graphics processing unit, a digital signal processor, a programmable logic device, a data processing logic device based on quantum computing, etc., which is not limited thereto.

Technical features in the above embodiments may be combined arbitrarily. For the sake of brevity, not all possible combinations of the technical features in the above embodiments are described. However, as long as there is no contradiction in the combination of these technical features, the combination should be considered as falling within the scope described in the present disclosure.

The above-mentioned embodiments only express several implementations of the present disclosure. The descriptions are specific and detailed, but should not be construed as limiting the patent scope of the present disclosure. It should be pointed out that those of ordinary skill in the art may make several modifications and improvements without departing from the concept of the present disclosure, and these modifications and improvements fall within the protection scope of the present disclosure. Therefore, the protection scope of the present disclosure should be subject to the appended claims.

**Claims**

1. A method for generating three-dimensional ultrasound images based on two-dimensional ultrasound images, the method being executed by at least one processor, and the method comprising :

   obtaining a two-dimensional (2D) ultrasound image of a subject;
   obtaining a target three-dimensional (3D) model of an anatomical structure of the subject; and
   obtaining a transformed target 3D model by transforming the target 3D model to align the target 3D model with the 2D ultrasound image.

2. The method of claim 1, wherein the transforming the target 3D model to align the target 3D model with the 2D ultrasound image includes:

   determining a first transformation model between the 2D ultrasound image and the target 3D model; and
   applying a first transformation on the target 3D model based on the first transformation model to align the 2D ultrasound image with the target 3D model.

3. The method of claim 2, wherein the determining a first transformation model between the 2D ultrasound image and the target 3D model includes:

   determining a 2D tomographic image from the target 3D model based on the 2D ultrasound image, the 2D tomographic image and the 2D ultrasound image representing a same slice in the subject;
   determining multiple pairs of anatomical semantic features from the 2D ultrasound image and the 2D tomographic image, each pair including a first anatomical semantic feature from the 2D ultrasound image and a second anatomical semantic feature from the 2D tomographic image, and the first anatomical semantic feature and the second anatomical semantic feature corresponding to a same region of the same slice in the subject; and
   determining the first transformation model between the 2D ultrasound image and the target 3D model based on the multiple pairs of anatomical semantic features.

4. The method of claim 2, wherein the determining a first transformation model between the 2D ultrasound image and the target 3D model includes:

   determining whether the 2D ultrasound image represents one of a plurality of predefined standard slices;
   in response to determining that the 2D ultrasound image does not represent any one of the plurality of predefined standard slices, determining pose information corresponding to the 2D ultrasound image based on the 2D ultrasound image and determining the first transformation model between the 2D ultrasound image and the target 3D model based on the pose information and the target 3D model; and
   in response to determining that the 2D ultrasound image represents one of the plurality of predefined standard slices, determining pose information corresponding to the 2D ultrasound image based on a standard pose of an ultrasound probe corresponding to the one of the plurality of predefined standard slices and determining the first transformation model between the 2D ultrasound image and the target 3D model based on the pose information and the target 3D model.

5. The method of any one of claims 1 to 4, wherein the transforming the target 3D model to align the target 3D model with the 2D ultrasound image includes:

determining a second transformation model between the 2D ultrasound image and the target 3D model based on the 2D ultrasound image and the target 3D model; and
transforming the target 3D model based on the second transformation model, wherein the second transformation model is constructed based on a Lie group.

6. The method of claim 5, wherein the determining a second transformation model between the 2D ultrasound image and the target 3D model based on the 2D ultrasound image and the target 3D model includes:

determining multiple pairs of anatomical feature points based on the 2D ultrasound image and the target 3D model, each pair of the multiple pairs of anatomical feature points including a contour point from the 2D ultrasound image and a grid point from the target 3D model matching the contour point; and
determining the second transformation model by minimizing a sum of second distances, each of the second distances being between a contour point and a grid point in each pair after the grid point is transformed using an intermediate second transformation model generated during minimization of the sum of second distances.

7. The method of any one of claims 1 to 6, wherein the transforming the target 3D model to align the target 3D model with the 2D ultrasound image includes:

determining a third transformation model between the 2D ultrasound image and the target 3D model based on the 2D ultrasound image and the target 3D model; and
transforming the target 3D model to align the target 3D model with the 2D ultrasound image based on the third transformation model, wherein the third transformation model is configured to stretch the target 3D model in at least two directions parallel to the 2D ultrasound image.

8. The method of claim 7, wherein the determining a third transformation model between the 2D ultrasound image and the target 3D model based on the 2D ultrasound image and the target 3D model includes:

determining multiple pairs of anatomical feature points based on the 2D ultrasound image and the target 3D model, each pair of the multiple pairs of anatomical feature points including a contour point from the 2D ultrasound image and a grid point from the target 3D model matching the contour point; and
determining the third transformation model by minimizing a sum of third distances and a soft constraint, each of the third distances being between the contour point and the grid point in each pair after the grid point is transformed using an intermediate transformation model generated during minimization of the sum of third distances, wherein the soft constraint is configured to constrain an affine matrix to approximate a rotation matrix.

9. The method of any one of claims 1 to 8, wherein the transforming the target 3D model to align the target 3D model with the 2D ultrasound image includes:
performing a first transformation operation and a second transformation operation on the target 3D model to obtain the transformed target 3D model.

10. The method of claim 9, wherein the performing a first transformation operation on the target 3D model includes:

determining a first transformation model by registering the 2D ultrasound image and the target 3D model based on multiple first pairs of anatomical semantic features determined from the 2D ultrasound image and the target 3D model;
determining a second transformation model by registering the 2D ultrasound image and the target 3D model based on the first transformation model and multiple second pairs of anatomical semantic features determined from the 2D ultrasound image and the target 3D model; and
performing the first transformation operation on the target 3D model by applying the second transformation model on the target 3D model.

11. The method of claim 10, wherein the operations further include:

segmenting the 2D ultrasound image to determine one or more first regions of the subject;

obtaining one or more second regions from the target 3D model, each of the one or more first regions and one of the one or more second regions corresponding to a same portion of the subject; and

determining, based on the one or more first regions and the one or more second regions, the multiple first pairs of anatomical semantic features and the multiple second pairs of anatomical semantic features.

12. The method of any one of claims 9 to 11, wherein performing a second transformation operation on the target 3D model includes:

determining a third transformation model by registering the 2D ultrasound image and the target 3D model, wherein the third transformation model includes a non-rigid registration model; and

applying the third transformation model on the transformed target 3D model after the first transformation operation is performed.

13. The method of any one of claims 1 to 12, wherein the method further includes:
generating a target 3D image of the subject based on the transformed target 3D model and the 2D ultrasound image.

14. A system, comprising:

at least one storage device including a set of instructions; and

at least one processor configured to communicate with the at least one storage device, wherein when executing the set of instructions, the at least one processor is configured to direct the system to perform the method of any one of claims 1 to 13.

15. A non-transitory computer-readable storage medium, wherein the storage medium stores one or more sets of computer instructions, and when a computer reads the one or more sets of computer instructions in the storage medium, the computer implements the method of any one of claims 1 to 13.

**FIG. 1**

**200**

Obtaining a 2D ultrasound image of a subject — 210

Obtaining a target 3D model of an anatomical structure associated with the subject — 220

Obtaining a transformed target 3D model by transforming the target 3D model based on the 2D ultrasound image to align the target 3D model with the 2D ultrasound image — 230

Generating a target 3D image of the subject based on the transformed target 3D model and/or the 2D ultrasound image — 240

**FIG. 2**

**300**

Determining whether the 2D ultrasound image represents one of a plurality of predefined standard slices — 310

In response to determining that the 2D ultrasound image does not represent any one of the plurality of predefined standard slices, determining pose information corresponding to the 2D ultrasound image based on the 2D ultrasound image and determining the first transformationation model between the 2D ultrasound image and the target 3D model based on the pose information and the target 3D transformation model — 320

In response to determining that the 2D ultrasound image represents one of the plurality of predefined standard slices, determining the pose information corresponding to the 2D ultrasound image based on the one of the plurality of predefined standard slices and determine the first transformationation model between the 2D ultrasound image and the target 3D model based on the pose information corresponding to the 2D ultrasound image and the target 3D transformation model — 330

**FIG. 3**

**400**

Determining, based on the 2D ultrasound image, first pose information of an ultrasound probe of an ultrasound device when the 2D ultrasound image is acquired by the ultrasound device — 410

Determining, based on the first pose information, second pose information of the ultrasound probe in the transformed target 3D model or the target 3D image — 420

**FIG. 4**

**500**

Obtaining a 2D ultrasound image of a subject — 510

↓

Determining a measurement size of a target region in the 2D ultrasound image based on the 2D ultrasound image — 520

↓

Determining a target 3D image of the subject based on a transformed target 3D transformation model, the 2D ultrasound image and the measurement size of the target region — 530

↓

Obtaining a second 2D ultrasound image, the second 2D ultrasound image and the 2D ultrasound image presenting different slices of the subject — 540

↓

Transforming the transformed target 3D model to align the second 2D ultrasound image with the transformed target 3D model and obtain an updated transformed target 3D transformation model — 550

↓

Updating the target 3D image of the subject based on the updated transformed target 3D model and the second 2D ultrasound image — 560

**FIG. 5**

**600**

```
┌─────────────────────────────────────────────┐
│                                             │  ⌐610
│   Obtaining a 2D ultrasound image of a subject │
│                                             │
└─────────────────────────────────────────────┘
                      │
                      ▼
┌─────────────────────────────────────────────┐
│                                             │  ⌐620
│   Obtaining a target 3D model of an anatomical │
│            structure of the subject          │
└─────────────────────────────────────────────┘
                      │
                      ▼
┌─────────────────────────────────────────────┐
│  Determining a second transformationation model │  ⌐630
│   between the 2D ultrasound image and the target │
│  3D model based on the 2D ultrasound image and │
│        the target 3D transformation model      │
└─────────────────────────────────────────────┘
                      │
                      ▼
┌─────────────────────────────────────────────┐
│   Transforming the target 3D model based on the │  ⌐640
│  second transformationation model, wherein the │
│ second transformationation model is constructed │
│             based on a Lie group               │
└─────────────────────────────────────────────┘
```

**FIG. 6**

(a)

(b)

3-1

(a)

(b)

3-2

(a)

(b)

3-3

(a)

(b)

3-4

**FIG. 7**

**800**

Obtaining a 2D ultrasound image of a subject ⌇ 810

Obtaining a target 3D model of an anatomical structure of the subject ⌇ 820

Determining a third transformationation model between the 2D ultrasound image and the target 3D model based on the 2D ultrasound image and the target 3D transformation model ⌇ 830

Transforming the target 3D model to align the target 3D model with the 2D ultrasound image based on the third transformationation model, wherein the third transformationation model is configured to stretch the target 3D model in at least two directions parallel to the 2D ultrasound image ⌇ 840

**FIG. 8**

4-1          4-2          4-3

4-4          4-5

**FIG. 9**

**1000**

Obtaining a 2D ultrasound image of a subject 〜 1010

↓

Obtaining a target 3D model of an anatomical structure of the subject 〜 1020

↓

Performing a first transformation operation and a second transformation operation on the target 3D model to obtain a transformed target 3D transformation model 〜 1030

**FIG. 10**

1100

| Determining a first transformationation model by registering the 2D ultrasound image and the target 3D model based on multiple first pairs of anatomical semantic features determined from the 2D ultrasound image and the target 3D transformation model. | 1110 |

| Determining a second transformationation model by registering the 2D ultrasound image and the target 3D model based on the first transformationation model and multiple second pairs of anatomical semantic features determined from the 2D ultrasound image and the target 3D transformation model | 1120 |

| Performing the first transformation operation on the target 3D model by applying the second transformationation model on the target 3D transformation model | 1130 |

**FIG. 11**

**FIG. 12**

**1300**

Obtaining a historical ultrasound image sequence including a plurality of historical ultrasound images     1310

Determining a correspondence relationship between a morphological index presented in the historical ultrasound image and time based on the historical ultrasound image     1320

Determining a motion phase of the 2D ultrasound image based on the morphological index determined from the 2D ultrasound image and the correspondence relationship between the morphological index and time     1330

**FIG. 13**

**1400**

```
┌─────────────────────────────────────────────┐
│                                             │  ⌇ 1410
│      Determining matching point pairs       │
│                                             │
└─────────────────────────────────────────────┘
                       │
                       ▼
┌─────────────────────────────────────────────┐
│   Determining a arget transform model based on │  ⌇ 1420
│           the matching point pairs          │
└─────────────────────────────────────────────┘
```

**FIG. 14**

Objective
function 710

Initial
transformationation
model 720

Intermediate target 3D model 730

transformed grid
points 740

The value 750 of
an objective
function

In a next
iteration

whether a termination
condition is satisfied

No

Yes

Intermediate
transformationation
model 760

Target
transformationation
model 770

**FIG. 15**

FIG. 16

**FIG. 17**

Obtaining module
181

Determination
module 182

The device 18 of determining a 3D image

**FIG. 18**

# EUROPEAN SEARCH REPORT

Application Number

EP 25 22 1764

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 110 799 852 A (KONINKLIJKE PHILIPS NV) 14 February 2020 (2020-02-14) | 1,2,4-15 | INV.<br>G01S15/89 |
| Y | * paragraphs [0012] - [0015], [0019], [0031], [0032], [0038], [0078] - [0079], [0111] - [0113] * | 3 | G06T19/00<br>G06T19/20 |
| | ----- | | |
| Y | US 2024/164758 A1 (WU ZIYAN [US] ET AL) 23 May 2024 (2024-05-23) | 3 | |
| A | * paragraphs [0012], [0038], [0030], [0019] - [0020], [0029] - [0031]; figure 5 * | 1,2,4-15 | |
| | ----- | | |
| A | CN 115 137 389 A (GE PRECISION MEDICINE LLC) 4 October 2022 (2022-10-04)<br>* paragraphs [0038] - [0041]; claims 1,2,6; figure 5 * | 1-15 | |
| | ----- | | |
| A | YEUNG PAK-HEI ET AL: "Adaptive 3D Localization of 2D Freehand Ultrasound Brain Images",<br>16 September 2022 (2022-09-16), 20220916, PAGE(S) 207 - 217, XP047633524,<br>[retrieved on 2022-09-16]<br>* Sec.1, Sec.2;<br>figure 2 * | 1-15 | TECHNICAL FIELDS SEARCHED (IPC)<br><br>G01S<br>G06T |
| | ----- | | |
| A | US 2021/304516 A1 (LEE JONG HWA [US] ET AL) 30 September 2021 (2021-09-30)<br>* paragraphs [0012] - [0015], [0028] - [0032]; claim 1 * | 1-15 | |
| | ----- | | |

The present search report has been drawn up for all claims

| Place of search | Date of completion of the search | Examiner |
|---|---|---|
| Munich | 4 February 2026 | Capone, Luigino |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 1764

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2026

| Patent document cited in search report | | Publication date | Patent family member(s) | | Publication date |
|---|---|---|---|---|---|
| CN 110799852 | A | 14-02-2020 | CN | 110799852 A | 14-02-2020 |
| | | | EP | 3422048 A1 | 02-01-2019 |
| | | | EP | 3646056 A1 | 06-05-2020 |
| | | | JP | 7365910 B2 | 20-10-2023 |
| | | | JP | 2020525118 A | 27-08-2020 |
| | | | JP | 2023133452 A | 22-09-2023 |
| | | | US | 2020205784 A1 | 02-07-2020 |
| | | | US | 2024041431 A1 | 08-02-2024 |
| | | | WO | 2019002006 A1 | 03-01-2019 |
| US 2024164758 | A1 | 23-05-2024 | CN | 117523096 A | 06-02-2024 |
| | | | US | 2024164758 A1 | 23-05-2024 |
| CN 115137389 | A | 04-10-2022 | CN | 115137389 A | 04-10-2022 |
| | | | US | 2022317294 A1 | 06-10-2022 |
| US 2021304516 | A1 | 30-09-2021 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202411804470
- CN 202411946582
- CN 202411942357
- CN 202411942352